# DEMANDE DE BREVET EUROPEEN

(11) **EP 3 263 374 A1**
(43) Date de publication de la demande: **03.01.2018**
(21) Numéro de dépôt: 17176780.9
(22) Date de dépôt: 20.06.2017
(51) Int. Cl.: B60H 1/00, B60H 1/32

(54) **CIRCUIT DE CLIMATISATION RÉVERSIBLE DE VÉHICULE AUTOMOBILE ET PROCÉDÉS DE FONCTIONNEMENT**

(30) Priorité: 30.06.2016 FR 1656196
(71) Demandeur: Valeo Systemes Thermiques, 78320 Le Mesnil Saint Denis (FR)
(72) Inventeur: YAHIA, Mohamed, 78322 LE MESNIL SAINT-DENIS CEDEX (FR); NICOLAS, Bertrand, 78322 LE MESNIL SAINT-DENIS CEDEX (FR); CLEMARON, Laetitia, 78322 LE MESNIL SAINT-DENIS CEDEX (FR); HALLER, Régine, 78322 LE MESNIL SAINT-DENIS CEDEX (FR); THUEZ, Jean-Luc, 78322 LE MESNIL SAINT-DENIS CEDEX (FR)
(74) Mandataire: Metz, Gaëlle

(57) **Abrégé**

La présente invention concerne un circuit de climatisation (1) réversible pour véhicule automobile et comportant :
∘ un compresseur (3),
∘ un premier échangeur de chaleur (5),
∘ un éjecteur (7),
∘ un dispositif de séparation de phases (9) du fluide réfrigérant,
∘ une première vanne de réglage (11),
∘ un deuxième échangeur de chaleur (13),
∘ une conduite de contournement (A) du dispositif de séparation de phases (9),
∘ une première branche de dérivation (B),
∘ une deuxième branche de dérivation (C), et
∘ une troisième branche de dérivation (D).

## Description

L'invention se rapporte au domaine des véhicules automobiles et plus particulièrement à un circuit de climatisation réversible de véhicule automobile et ses procédés de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur placé en contact avec un flux d'air extérieur au véhicule automobile pour libérer de la chaleur, un dispositif de détente et un deuxième échangeur de chaleur placé en contact avec un flux d'air intérieur du véhicule automobile pour le refroidir.

Le circuit de climatisation peut être réversible, c'est à dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

On parle de pompe à chaleur directe lorsque le troisième échangeur de chaleur est alimenté directement par le fluide réfrigérant du circuit de climatisation. On parle de pompe à chaleur indirecte lorsque le troisième échangeur de chaleur est alimenté par un autre fluide caloporteur que le fluide réfrigérant. Le fluide réfrigérant transfère de l'énergie calorifique à un fluide caloporteur circulant dans une boucle de gestion thermique au moyen notamment d'un échangeur de chaleur bifluide.

Les performances d'un circuit de climatisation réversible sont généralement retranscrites par un coefficient de performance (COP pour « coefficient of performance » en anglais) qui correspond au quotient entre la chaleur restituée, au niveau du condenseur, et le travail fourni, notamment par le compresseur.

Afin d'améliorer le COP du circuit de climatisation il est connu d'utiliser comme dispositif de détente un éjecteur qui comporte :
- une première entrée de fluide réfrigérant en provenance du condenseur,
- une sortie de fluide réfrigérant en direction d'un dispositif de séparation de phases, et
- une deuxième entrée de fluide réfrigérant en provenance d'un évaporateur.

Au niveau du dispositif de séparation de phases, la phase liquide du fluide réfrigérant est redirigée vers l'évaporateur et la phase gazeuse du fluide réfrigérant est quant à elle redirigée vers le compresseur.

Cependant, lors de températures extérieures très basses, l'influence d'un éjecteur sur le COP peut être limitée voir s'inverser, c'est-à-dire que le COP peut diminuer et être inférieur à celui d'un circuit de climatisation « classique ».

Afin d'améliorer le COP d'un circuit de climatisation « classique », il est connu d'équiper le circuit de climatisation avec un échangeur de chaleur interne (IHX pour « internal heat exchanger » en anglais) qui permet un échange de chaleur entre le fluide réfrigérant en sortie du condenseur et le fluide réfrigérant en phase gazeuse en provenance du dispositif de séparation de phases.

Cependant, l'utilisation d'un IHX diminue la température du fluide réfrigérant à l'entrée du primaire de l'éjecteur ce qui diminue l'efficacité dudit éjecteur et son impact sur le COP.

Un des buts de la présente invention est donc de remédier au moins partiellement aux inconvénients de l'art antérieur et de proposer un circuit de climatisation réversible amélioré.

La présente invention concerne donc un circuit de climatisation réversible pour véhicule automobile dans lequel circule un fluide réfrigérant et comportant dans le sens de circulation du fluide réfrigérant :
∘ un compresseur,
∘ un premier échangeur de chaleur destiné à être traversé par un flux d'air extérieur au véhicule automobile et disposé en aval du compresseur,
∘ un éjecteur disposé en aval du premier échangeur de chaleur, et comprenant :
   - une première entrée de fluide réfrigérant, reliée audit premier échangeur de chaleur,
   - une deuxième entrée de fluide réfrigérant, et
   - une sortie de fluide réfrigérant,
∘ un dispositif de séparation de phases du fluide réfrigérant comportant :
   - une entrée de fluide réfrigérant, reliée à la sortie de fluide réfrigérant de l'éjecteur,
   - une première sortie de fluide réfrigérant en phase gazeuse, reliée au compresseur, et
   - une deuxième sortie de fluide réfrigérant en phase liquide,
∘ une première vanne de réglage disposée en aval de la deuxième sortie de fluide réfrigérant du dispositif de séparation de phases,
∘ un deuxième échangeur de chaleur destiné à être traversé par un flux d'air intérieur à destination de l'habitacle du véhicule automobile, ledit deuxième échangeur étant disposé en aval de la première vanne de réglage, entre ladite première vanne de réglage et la deuxième entrée de fluide réfrigérant de l'éjecteur,
∘ une conduite de contournement du dispositif de séparation de phases, ladite conduite de contournement comportant un troisième échangeur de chaleur, et reliant :
   - un premier point de jonction disposé en aval de la sortie de fluide réfrigérant de l'éjecteur, entre ledit éjecteur et le dispositif de séparation de phases, et
   - un deuxième point de jonction disposé en aval de la première sortie du dispositif de séparation de phases, entre ledit dispositif de séparation de phases et le compresseur,
∘ une première branche de dérivation comportant un quatrième échangeur de chaleur destiné à être traversé par le flux d'air intérieur, et reliant :
   - un troisième point de jonction disposé en aval du compresseur, entre ledit compresseur et le premier échangeur de chaleur, et
   - un quatrième point de jonction disposé en aval de premier échangeur de chaleur, entre ledit premier échangeur de chaleur et la première entrée de l'éjecteur,
∘ une deuxième branche de dérivation reliant :
   - un cinquième point de jonction disposé en aval du premier échangeur de chaleur, entre ledit premier échangeur de chaleur et le quatrième point de jonction,
   - un sixième point de jonction disposé en aval du deuxième échangeur de chaleur, entre ledit deuxième échangeur de chaleur et la deuxième entrée de l'éjecteur,
∘ une troisième branche de dérivation, comportant une deuxième vanne de réglage, et reliant :
   - un septième point de jonction disposé en aval de la deuxième sortie du dispositif de séparation de phases, entre ladite deuxième sortie du dispositif de séparation de phases et la première vanne de réglage,
   - un huitième point de jonction disposé en aval du troisième point de jonction, entre ledit troisième point de jonction et le premier échangeur de chaleur.

Selon un aspect de l'invention, le circuit de climatisation réversible comporte un dispositif de gestion et de distribution du fluide réfrigérant en provenance de l'éjecteur vers la conduite de contournement et/ou le dispositif de séparation de phases.

Selon un autre aspect de l'invention, le troisième échangeur de chaleur est destiné à être traversé par le flux d'air intérieur à destination de l'habitacle du véhicule automobile.

Selon un autre aspect de l'invention, le troisième échangeur de chaleur est placé en amont du deuxième échangeur de chaleur dans le sens de circulation du flux d'air intérieur à destination de l'habitacle du véhicule automobile.

Selon un autre aspect de l'invention, le circuit de climatisation réversible comporte un échangeur de chaleur interne permettant un échange de chaleur entre le fluide réfrigérant en sortie du premier échangeur de chaleur et le fluide réfrigérant en sortie du dispositif de séparation de phases et/ou du troisième échangeur de chaleur.

Selon un autre aspect de l'invention, l'échangeur de chaleur interne comporte une entrée et une sortie de fluide réfrigérant en provenance du premier échangeur de chaleur disposées en amont du cinquième point de jonction.

Selon un autre aspect de l'invention, l'échangeur de chaleur interne comporte une entrée et une sortie de fluide réfrigérant en provenance du premier échangeur de chaleur disposées en aval du cinquième point de jonction.

Selon un autre aspect de l'invention, le circuit de climatisation réversible comporte une branche de contournement de l'échangeur de chaleur interne reliant :
∘ un neuvième point de jonction disposé en aval du deuxième point de jonction, entre ledit deuxième point de jonction et l'échangeur de chaleur interne, et
∘ un dixième point de jonction disposé en aval de l'échangeur de chaleur interne, entre ledit échangeur de chaleur interne et le compresseur.

Selon un autre aspect de l'invention, le circuit de climatisation réversible comporte un cinquième échangeur de chaleur disposé en aval du dispositif de gestion et de distribution, entre ledit dispositif de gestion et de distribution et la première entrée du dispositif de séparation de phases.

La présente invention concerne également un procédé de fonctionnement du circuit de climatisation réversible selon un mode pompe à chaleur dans lequel, le fluide réfrigérant passe successivement dans :
∘ le compresseur,
∘ le quatrième échangeur de chaleur de la première branche de dérivation,
∘ l'éjecteur, via sa première entrée,
∘ le dispositif de séparation de phases, où :
   ▪ la phase liquide du fluide réfrigérant passe ensuite dans le deuxième dispositif de détente de la troisième branche de dérivation, le premier échangeur de chaleur, le fluide réfrigérant revenant dans l'éjecteur via sa deuxième entrée, en empruntant la deuxième branche de dérivation,
   ▪ la phase gazeuse du fluide réfrigérant retourne vers le compresseur.

Selon un aspect du mode pompe à chaleur selon l'invention, le fluide réfrigérant en phase gazeuse en sortie du dispositif de séparation de phases passe par l'échangeur de chaleur interne avant de rejoindre le compresseur et le fluide réfrigérant en sortie du premier échangeur de chaleur passe par l'échangeur de chaleur interne avant de rejoindre la deuxième entrée de l'éjecteur.

Selon un autre aspect du procédé de fonctionnement, le circuit de climatisation réversible peut fonctionner selon un premier mode de déshumidification dans lequel le fluide réfrigérant passe successivement dans :
∘ le compresseur,
∘ une portion du fluide réfrigérant en provenance du compresseur passant dans :
   ▪ le premier échangeur de chaleur,
   ▪ l'éjecteur, via sa première entrée,
      - une portion de fluide réfrigérant en sortie de l'éjecteur passant par le dispositif de séparation de phases, et :
         ∘ la phase liquide du fluide réfrigérant passe ensuite dans la première vanne de réglage, le deuxième échangeur de chaleur, le fluide réfrigérant revenant dans l'éjecteur via sa deuxième entrée,
         ∘ la phase gazeuse du fluide réfrigérant retourne vers le compresseur, et
      - une autre portion du fluide réfrigérant en sortie de l'éjecteur passant par le troisième échangeur de chaleur de la conduite de contournement avant de retourner vers le compresseur,
∘ une autre portion du fluide réfrigérant en provenance du compresseur passant dans le quatrième échangeur de chaleur de la première branche de dérivation, avant de retourner dans l'éjecteur, via sa première entrée.

Selon un aspect du premier mode de déshumidification, le fluide réfrigérant en phase gazeuse en sortie du dispositif de séparation de phases, mélangé avec le fluide en provenance du troisième échangeur de chaleur, passe par l'échangeur de chaleur interne avant de rejoindre le compresseur et le fluide réfrigérant en sortie du premier échangeur de chaleur passe par l'échangeur de chaleur interne avant de se mélanger avec le fluide réfrigérant en provenance du quatrième échangeur de chaleur.

Selon un autre aspect du procédé de fonctionnement, le circuit de climatisation réversible peut fonctionner selon un deuxième mode de déshumidification dans lequel, le fluide réfrigérant passe successivement dans :
∘ le compresseur,
∘ le quatrième échangeur de chaleur de la première branche de dérivation,
∘ l'éjecteur, via sa première entrée,
∘ le dispositif de séparation de phases, où :
   ▪ une portion du fluide réfrigérant en phase liquide passe dans la deuxième vanne de réglage de la troisième branche de dérivation, le premier échangeur de chaleur, le fluide réfrigérant revenant dans l'éjecteur via sa deuxième entrée, en empruntant la deuxième branche de dérivation,
   ▪ une autre portion du fluide réfrigérant en phase liquide passe dans la première vanne de réglage, le deuxième échangeur de chaleur, le fluide réfrigérant revenant dans l'éjecteur via sa deuxième entrée, et
   ▪ la phase gazeuse du fluide réfrigérant retourne vers le compresseur.

Selon un aspect du deuxième mode de déshumidification, le fluide réfrigérant en phase gazeuse en sortie du dispositif de séparation de phases, passe par l'échangeur de chaleur interne avant de rejoindre le compresseur et le fluide réfrigérant en sortie du premier échangeur de chaleur passe par l'échangeur de chaleur interne avant de retourner vers l'éjecteur via sa deuxième entrée, en empruntant la deuxième branche de dérivation.

Selon un autre aspect du procédé de fonctionnement, le circuit de climatisation réversible peut fonctionner selon un mode récupération de chaleur dans lequel, le fluide réfrigérant passe successivement dans :
∘ le compresseur,
∘ le quatrième échangeur de chaleur de la première branche de dérivation,
∘ l'éjecteur, via sa première entrée,
   - une portion de fluide réfrigérant en sortie de l'éjecteur passant par le dispositif de séparation de phases, et :
      ∘ la phase liquide du fluide réfrigérant passe ensuite dans la première vanne de réglage, le deuxième échangeur de chaleur, le fluide réfrigérant revenant dans l'éjecteur via sa deuxième entrée,
      ∘ la phase gazeuse du fluide réfrigérant retourne vers le compresseur, et
   - une autre portion du fluide réfrigérant en sortie de l'éjecteur passant par le troisième échangeur de chaleur de la conduite de contournement avant de retourner vers le compresseur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation selon un premier mode de réalisation,
- la figure 2 montre une représentation schématique d'un circuit de climatisation selon un deuxième mode de réalisation,
- la figure 3a montre une représentation schématique du circuit de climatisation de la figure 1 selon un premier mode de refroidissement,
- la figure 3b montre un diagramme pression / enthalpie du fluide réfrigérant selon le premier mode de refroidissement de la figure 3a,
- la figure 4a montre une représentation schématique du circuit de climatisation de la figure 2 selon une variante du premier mode de refroidissement,
- la figure 4b montre un diagramme pression / enthalpie du fluide réfrigérant selon la variante du premier mode de refroidissement de la figure 4a,
- les figures 5a à 5c montrent des représentations schématiques de dispositifs de gestion et de distribution selon différents modes de réalisation,
- la figure 6a montre une représentation schématique du circuit de climatisation de la figure 1 selon un deuxième mode de refroidissement,
- la figure 6b montre un diagramme pression / enthalpie du fluide réfrigérant selon le deuxième mode de refroidissement de la figure 6a.
- la figure 7a montre une représentation schématique du circuit de climatisation de la figure 2 selon une variante du deuxième mode de refroidissement,
- la figure 7b montre un diagramme pression / enthalpie du fluide réfrigérant selon la variante du deuxième mode de refroidissement de la figure 7a.
- la figure 8a montre une représentation schématique du circuit de climatisation de la figure 1 selon un troisième mode de refroidissement,
- la figure 8b montre un diagramme pression / enthalpie du fluide réfrigérant selon le troisième mode de refroidissement de la figure 8a,
- la figure 9a montre une représentation schématique du circuit de climatisation de la figure 2 selon une variante du troisième mode de refroidissement,
- la figure 9b montre un diagramme pression / enthalpie du fluide réfrigérant selon la variante du troisième mode de refroidissement de la figure 9a,
- la figure 10a montre une représentation schématique du circuit de climatisation de la figure 1 selon un mode pompe à chaleur,
- la figure 10b montre un diagramme pression / enthalpie du fluide réfrigérant selon le mode pompe à chaleur de la figure 10a,
- la figure 11a montre une représentation schématique du circuit de climatisation de la figure 2 selon une variante du mode pompe à chaleur,
- la figure 11b montre un diagramme pression / enthalpie du fluide réfrigérant selon la variante du troisième mode pompe à chaleur de la figure 11a,
- la figure 12a montre une représentation schématique du circuit de climatisation de la figure 1 selon un premier mode de déshumidification,
- la figure 12b montre un diagramme pression / enthalpie du fluide réfrigérant selon le premier mode de déshumidification de la figure 12a,
- la figure 13a montre une représentation schématique du circuit de climatisation de la figure 2 selon une variante du premier mode de déshumidification,
- la figure 13b montre un diagramme pression / enthalpie du fluide réfrigérant selon la variante du premier mode de déshumidification de la figure 13a,
- la figure 14a montre une représentation schématique du circuit de climatisation de la figure 1 selon un deuxième mode de déshumidification,
- la figure 14b montre un diagramme pression / enthalpie du fluide réfrigérant selon le deuxième mode de déshumidification de la figure 14a,
- la figure 15a montre une représentation schématique du circuit de climatisation de la figure 2 selon une variante du deuxième mode de déshumidification,
- la figure 15b montre un diagramme pression / enthalpie du fluide réfrigérant selon la variante du deuxième mode de déshumidification de la figure 15a,
- la figure 16a montre une représentation schématique du circuit de climatisation de la figure 1 selon un mode de récupération de chaleur,
- la figure 16b montre un diagramme pression / enthalpie du fluide réfrigérant selon le mode de récupération de chaleur de la figure 16a,
- la figure 17 montre une représentation schématique du circuit de climatisation de la figure 2 selon une variante du mode de récupération de chaleur,
- la figure 18 montre une représentation schématique d'un circuit de climatisation selon un troisième mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

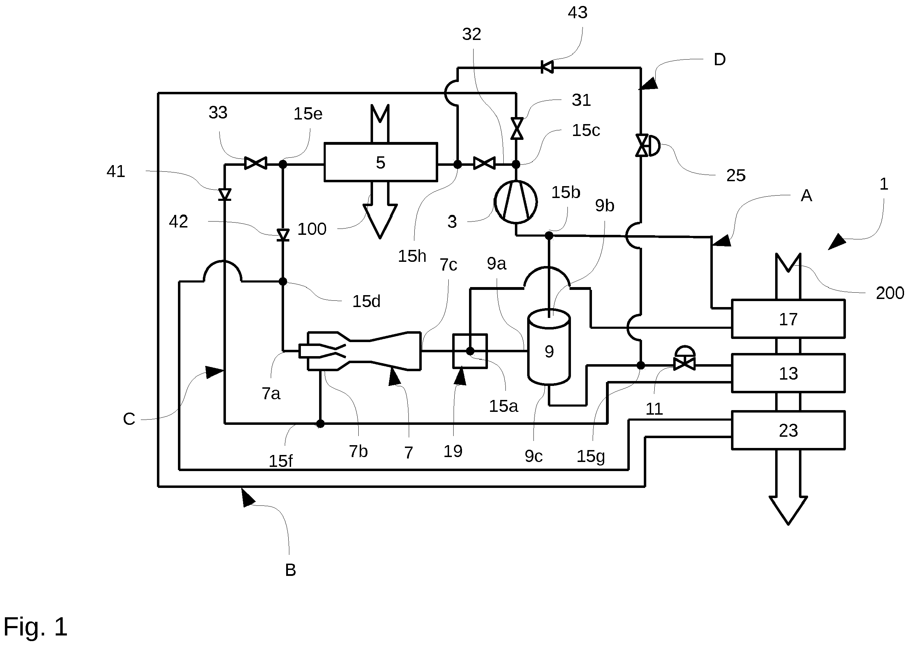

La figure 1 montre un circuit de climatisation 1 réversible pour véhicule automobile dans lequel circule un premier fluide réfrigérant selon un premier mode de réalisation. Le circuit de climatisation 1 réversible comporte dans le sens de circulation du fluide réfrigérant :
∘ un compresseur 3,
∘ un premier échangeur de chaleur 5 destiné à être traversé par un flux d'air extérieur 100 au véhicule automobile et disposé en aval du compresseur 3,
∘ un éjecteur 7 disposé en aval du premier échangeur de chaleur 5, et comprenant :
   - une première entrée 7 a de fluide réfrigérant, reliée audit premier échangeur de chaleur 5,
   - une deuxième entrée 7b de fluide réfrigérant, et
   - une sortie 7c de fluide réfrigérant,
∘ un dispositif de séparation de phases 9 du fluide réfrigérant comportant :
   - une entrée de fluide réfrigérant 9a, reliée à la sortie 7c de fluide réfrigérant de l'éjecteur 7,
   - une première sortie 9b de fluide réfrigérant en phase gazeuse, reliée au compresseur 3, et
   - une deuxième sortie 9c de fluide réfrigérant en phase liquide,
∘ une première vanne de réglage 11 disposée en aval de la deuxième sortie 9c de fluide réfrigérant du dispositif de séparation de phases 9,
∘ un deuxième échangeur de chaleur 13 destiné à être traversé par un flux d'air intérieur 200 à destination de l'habitacle du véhicule automobile, ledit deuxième échangeur 13 étant disposé en aval de la première vanne de réglage 11, entre ladite première vanne de réglage 11 et la deuxième entrée 7b de fluide réfrigérant de l'éjecteur 7.

Le circuit de climatisation 1 réversible comporte en outre :
∘ une conduite de contournement A du dispositif de séparation de phases 9, ladite conduite de contournement A comportant un troisième échangeur de chaleur 17, et reliant :
   - un premier point de jonction 15a disposé en aval de la sortie 7c de fluide réfrigérant de l'éjecteur 7, entre ledit éjecteur 7 et le dispositif de séparation de phases 9, et
   - un deuxième point de jonction 15b disposé en aval de la première sortie 9b du dispositif de séparation de phases 9, entre ledit dispositif de séparation de phases 9 et le compresseur 3,
∘ une première branche de dérivation B comportant un quatrième échangeur de chaleur 23 destiné à être traversé par le flux d'air intérieur 200, de préférence en aval des deuxième 13 et troisième 17 échangeurs de chaleur, ladite première branche de dérivation B reliant :
   - un troisième point de jonction 15c disposé en aval du compresseur 3, entre ledit compresseur 3 et le premier échangeur de chaleur 5, et
   - un quatrième point de jonction 15d disposé en aval de premier échangeur de chaleur 5, entre ledit premier échangeur de chaleur 5 et la première entrée 7a de l'éjecteur 7,
∘ une deuxième branche de dérivation C reliant :
   - un cinquième point de jonction 15e disposé en aval du premier échangeur de chaleur 5, entre ledit premier échangeur de chaleur 5 et le quatrième point de jonction 15d, et
   - un sixième point de jonction 15f disposé en aval du deuxième échangeur de chaleur 13, entre ledit deuxième échangeur de chaleur 13 et la deuxième entrée 7b de l'éjecteur 7,
∘ une troisième branche de dérivation D, comportant une deuxième vanne de réglage 25, et reliant :
   - un septième point de jonction 15g disposé en aval de la deuxième sortie 9c du dispositif de séparation de phases 9, entre ladite deuxième sortie 9c du dispositif de séparation de phases 9 et la première vanne de réglage 11,
   - un huitième point de jonction 15h disposé en aval du troisième point de jonction 15c, entre ledit troisième point de jonction 15c et le premier échangeur de chaleur 5.

Le fluide réfrigérant peut notamment être du dioxyde de carbone connu dans le domaine des circuits de climatisation sous le nom R744.

Par première 11 et deuxième 25 vanne de réglage, on entend une vanne apte à permettre une perte de pression du fluide réfrigérant en phase liquide, comme par exemple une vanne à orifice calibré.

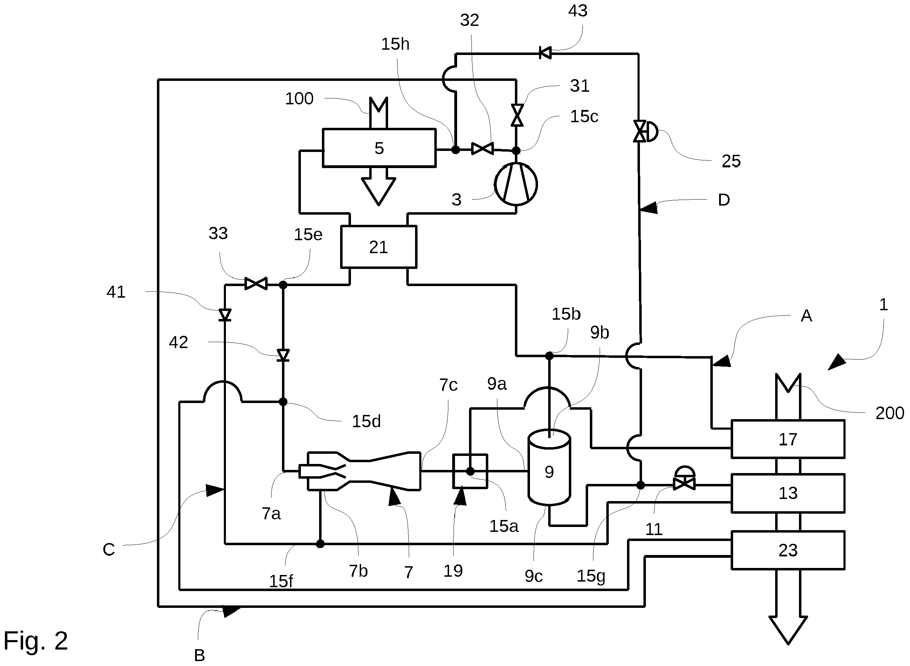

Comme le montre la figure 2, le circuit de climatisation 1 réversible peut également comporter un échangeur de chaleur interne 21 (IHX pour « internal heat exchanger ») permettant un échange de chaleur entre le fluide réfrigérant en sortie du premier échangeur de chaleur 5 et le fluide réfrigérant en sortie du dispositif de séparation de phases 9 et/ou du troisième échangeur de chaleur 17. Les autres éléments sont identiques à ceux de la figure 1. Cet IHX 21 comporte notamment une entrée et une sortie de fluide réfrigérant en provenance du deuxième point de jonction 15b. Ledit IHX 21 peut également comporter une entrée et une sortie de fluide réfrigérant en provenance du premier échangeur de chaleur 5 disposées en amont du cinquième point de jonction 15e.

Le circuit de climatisation 1 réversible comporte également un dispositif de redirection du fluide réfrigérant afin de permettre ou non la circulation dudit fluide réfrigérant dans la première branche de dérivation B, la deuxième branche de dérivation C et la troisième branche de dérivation D.

Ce dispositif de redirection du fluide peut notamment comporter :
- une première vanne d'arrêt 31 disposée sur la première branche de dérivation B, entre le troisième point de jonction 15c et le quatrième échangeur de chaleur 23,
- une deuxième vanne d'arrêt 32 disposée en aval du troisième point de jonction 15c, entre ledit troisième point de jonction 15c et le huitième point de jonction 15h,
- une troisième vanne d'arrêt 33 disposée sur la deuxième branche de dérivation C,
- un premier clapet antiretour 41 disposé sur la deuxième branche de dérivation C, en aval de la troisième vanne d'arrêt 33, entre ladite vanne d'arrêt 33 et le sixième point de jonction 15f,
- un deuxième clapet antiretour 42 disposé en aval du cinquième point de jonction 15e, entre ledit cinquième point de jonction 15e et la première entrée 7a de l'éjecteur 7,
- un troisième clapet antiretour 43 disposé sur la troisième branche de dérivation D entre la deuxième vanne de réglage 25 et le huitième point de jonction 15h.

De plus, les premier 11 et deuxième 25 dispositifs de détente peuvent être des dispositifs aptes à être fermés afin de bloquer le flux de fluide réfrigérant. Une solution alternative pour empêcher le fluide réfrigérant de traverser lesdits premier 11 et deuxième 25 dispositifs de détente peut être de disposer une vanne d'arrêt juste en amont desdits premier 11 et deuxième 25 dispositifs de détente.

Un tel dispositif de redirection du fluide réfrigérant, avec ses vannes et clapets anti-retour, a l'avantage de pouvoir assurer ses fonctions de redirection et de sélection avec un minimum d'éléments tels que les vannes d'arrêt et les clapets anti-retour, qui sont peu onéreux.

Par vannes d'arrêts, clapets antiretour ou vanne de réglage, on entend ici des éléments mécaniques ou électroniques pouvant être pilotées par une unité de commande électronique embarquée dans le véhicule automobile.

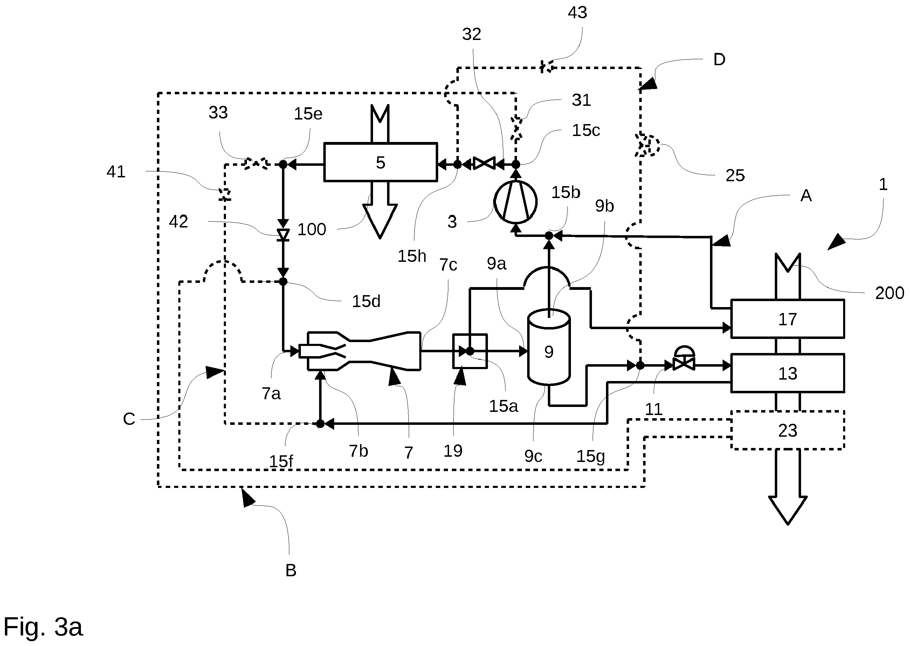

La présence de la conduite de contournement A et du troisième échangeur de chaleur 17 permet un procédé de fonctionnement du circuit de climatisation 1 réversible selon un premier mode de refroidissement illustré à la figure 3a, où le sens de circulation du fluide réfrigérant est représenté par des flèches. Les éléments dans lesquels le fluide réfrigérant circule sont représentés en trait plein et les éléments où le fluide réfrigérant ne circule pas sont représentés en traits pointillés. Dans ce premier mode de refroidissement de la figure 3a, le fluide réfrigérant passe successivement dans le compresseur 3, le premier échangeur de chaleur 5, et l'éjecteur 7 par l'entrée 7b. Le flux de fluide réfrigérant est ensuite divisé au niveau du premier point de jonction 15a de sorte que :
∘ une portion de fluide réfrigérant en provenance de l'éjecteur 7 passe par le dispositif de séparation de phases 9, et :
   ▪ la phase liquide du fluide réfrigérant passe ensuite dans la première vanne de réglage 11, le deuxième échangeur de chaleur 13 et le fluide réfrigérant revenant dans l'éjecteur 7,
   ▪ la phase gazeuse du fluide réfrigérant retourne vers le compresseur 3, et
∘ une autre portion du fluide réfrigérant en provenance de l'éjecteur 7 passe par le troisième échangeur de chaleur 17 de la conduite de contournement A avant de retourner vers le compresseur 3, via le deuxième point de jonction 15b.

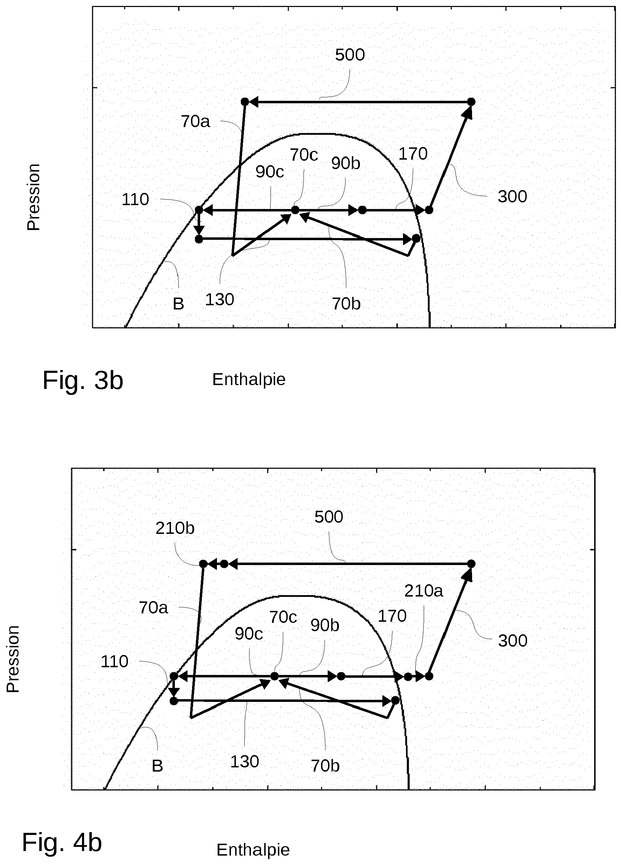

Les variations de pression et d'enthalpie que subit le fluide réfrigérant lors de ce premier mode de refroidissement, sont illustrées sur le diagramme pression / enthalpie de la figure 3b. La courbe B représente la courbe de saturation du fluide réfrigérant.

Le fluide réfrigérant à l'entrée du compresseur 3 est en phase gazeuse et subit une compression, illustrée par la flèche 300, en passant dans ledit compresseur 3.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit éjecteur 7, illustrée par le point 70c.

Une partie du fluide réfrigérant passe ensuite dans le dispositif de séparation de phases 9, alors que l'autre partie du fluide réfrigérant passe dans la conduite de contournement A.

Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c. Le fluide réfrigérant passe ensuite dans la première vanne de réglage 11 où il subit une perte de pression, illustrée par la flèche 110. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, comme le montre la flèche 70b.

Toujours au niveau du dispositif de séparation de phases 9, la phase gazeuse du fluide réfrigérant est quant à elle redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b. Avant d'atteindre le compresseur 3, le fluide réfrigérant issu de la première sortie 9a du dispositif de séparation de phases 9 se mélange au niveau du deuxième point de jonction 15b avec le fluide réfrigérant en provenance de la conduite de contournement A.

Au sein de la conduite de contournement A, le fluide réfrigérant passe au travers du troisième échangeur de chaleur 17 où il gagne de l'enthalpie comme illustré par la flèche 170. Ce mélange entre le fluide réfrigérant en phase gazeuse issu du dispositif de séparation de phases 9 et le fluide réfrigérant issu de la conduite de contournement A, permet au fluide réfrigérant de dépasser la courbe de saturation B. Le fluide réfrigérant est donc en état de gaz surchauffé avant d'entrer dans le compresseur 3.

Le coefficient de performance (COP pour « coefficient of performance ») est amélioré par rapport à un circuit de climatisation « classique » de deux façons.

Premièrement, le COP est amélioré par l'action de l'éjecteur 7 qui permet au fluide réfrigérant, en entrée du compresseur 3, d'avoir une pression supérieure à la pression à laquelle l'échange de chaleur entre le flux d'air intérieur 200 et le fluide réfrigérant a lieu, au niveau du deuxième échangeur de chaleur 13. Moins de puissance au niveau du compresseur 3 est donc nécessaire pour atteindre la pression souhaitée en sortie du compresseur 3.

Deuxièmement, le COP est amélioré du fait de la présence du troisième échangeur de chaleur 17 qui permet une surchauffe du fluide réfrigérant avant son entrée dans le compresseur 3 et donc un gain d'enthalpie.

Dans ce premier mode de refroidissement, le dispositif de redirection du fluide réfrigérant est configuré de sorte que le fluide réfrigérant ne circule pas dans les première B, deuxième C et troisième D branches de dérivation.

Cela est notamment possible en :
- fermant la première vanne d'arrêt 31 et en ouvrant la deuxième vanne d'arrêt 32 afin que le fluide réfrigérant en sortie du compresseur 3 ne circule pas dans la première branche de dérivation B,
- fermant la troisième vanne d'arrêt 33 afin que le fluide réfrigérant en sortie du premier échangeur de chaleur 5 ne circule pas dans la deuxième branche de dérivation C,
- fermant la deuxième vanne de réglage 25 afin que le fluide réfrigérant en phase liquide en sortie du dispositif de séparation de phases 9 ne circule pas dans la troisième branche de dérivation D.

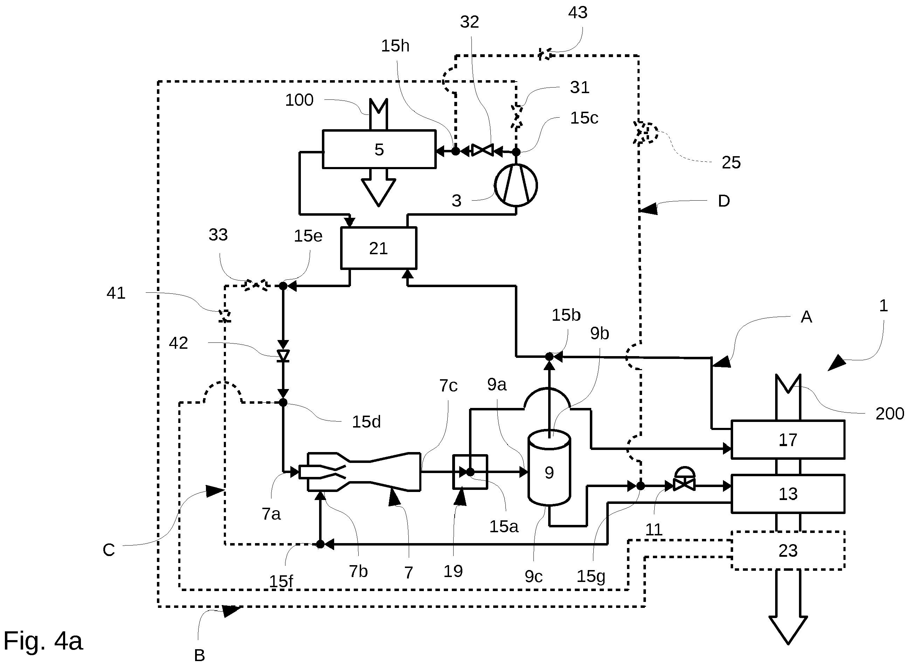

Selon une variante, le premier mode de refroidissement peut fonctionner lorsque le circuit de climatisation 1 réversible comporte un IHX 21, comme cela est illustré à la figure 4a. Cette variante du premier mode de refroidissement comporte les mêmes étapes que le premier mode de refroidissement illustré à la figure 3a, à la différence que :
- avant d'arriver dans l'éjecteur 7 au niveau de la première entrée 7a, le fluide réfrigérant passe par l'IHX 21, et
- avant d'arriver dans le compresseur 3, le mélange de fluide réfrigérant issu de la première sortie 9b du dispositif de séparation de phases 9 et du fluide réfrigérant en provenance de la conduite de contournement A passe également par l'IHX 21.

L'influence de l'IHX 21 est visible sur le diagramme pression /enthalpie de la figure 4b. L'IHX 21 permet une augmentation de l'enthalpie du fluide réfrigérant, illustrée par la flèche 210a, avant son entrée dans le compresseur 3. Du fait que l'enthalpie du fluide réfrigérant en entrée du compresseur 3 est plus importante, l'enthalpie du fluide réfrigérant en sortie du compresseur 3 sera elle aussi supérieure à l'enthalpie du fluide réfrigérant lorsqu'il n'y a pas d'IHX. Cette augmentation de l'enthalpie en amont du compresseur 3 est permise par la baisse de l'enthalpie du fluide réfrigérant en sortie du premier échangeur de chaleur 5, illustrée par la flèche 210b. L'IHX 21 améliore le COP en diminuant l'enthalpie du fluide réfrigérant en sortie du premier échangeur de chaleur 5 et en la transférant au fluide réfrigérant avant son entrée dans le compresseur 3.

Néanmoins, plus l'enthalpie du fluide avant d'arriver dans l'éjecteur 7 au niveau de la première entrée 7 a est faible, par exemple du fait de températures extérieures basses, moins l'efficacité de l'éjecteur 7 sur le COP est bonne. En effet, cela limite la recompression du fluide réfrigérant au niveau de l'éjecteur 7 qui permet au fluide réfrigérant de passer d'une pression donnée au niveau du deuxième échangeur de chaleur 17 à une pression supérieure avant son entrée dans le compresseur 3. Il faudrait alors augmenter la puissance du compresseur 3, et donc diminuer le COP, pour compenser cette diminution de la différence de pression. Par exemple, pour des températures extérieures basses, le COP d'un circuit de climatisation 1 réversible avec éjecteur 7 et IHX 21 peut être inférieur à un circuit de climatisation « classique » comprenant un IHX 21.

Le fait que le circuit de climatisation 1 réversible comporte une boucle de contournement A comprenant le troisième échangeur de chaleur 17 permet de limiter cet effet négatif de l'IHX 21 sur l'efficacité de l'éjecteur 7. En effet, le troisième échangeur de chaleur 17 surchauffe le fluide réfrigérant et augmente donc son enthalpie avant d'entrer dans l'IHX 21. Le fait que le fluide réfrigérant en provenance du dispositif de séparation de phase 9 et de la boucle de contournement A soit plus chaud, diminue l'efficacité de l'IHX 21 et donc l'enthalpie du fluide réfrigérant avant d'arriver dans l'éjecteur 7 au niveau de la première entrée 7a, sera moins faible et donc permettra à l'éjecteur 7 d'être efficace sur le COP du circuit de climatisation 1.

Le troisième échangeur de chaleur 17 peut par exemple être, à l'instar du deuxième échangeur de chaleur 13, destiné à être traversé par un flux d'air intérieur 200 à destination de l'habitacle du véhicule automobile. Dans ce cas de figure, ledit troisième échangeur de chaleur 17 est de préférence placé en amont du deuxième échangeur de chaleur 13, dans le sens de circulation du flux d'air intérieur 200 à destination de l'habitacle du véhicule automobile. En effet, cela permet au troisième échangeur de chaleur 17 d'être alimenté par un flux d'air intérieur 200 chaud et d'y puiser de l'énergie calorifique avant que ledit flux d'air intérieur 200 ne traverse le deuxième échangeur de chaleur 13. Cela permet également une augmentation de la surface d'échange entre le fluide réfrigérant et le flux d'air intérieur 200 et ainsi améliore les échanges de chaleur entre ledit fluide réfrigérant et ledit flux d'air intérieur 200.

Il est cependant tout à fait possible d'imaginer une position différente du troisième échangeur de chaleur 17. Ce dernier peut par exemple être un échangeur de chaleur branché sur autre circuit d'échange ou de régulation thermique du véhicule avec lequel il peut échanger de l'énergie calorifique.

Le circuit de climatisation 1 réversible peut également comporter un dispositif de gestion et de distribution 19 du fluide réfrigérant en provenance de l'éjecteur 7 vers la conduite de contournement A et/ou le dispositif de séparation de phases 9. Ce dispositif de gestion et de distribution 19 permet le contrôle de la circulation du fluide réfrigérant.

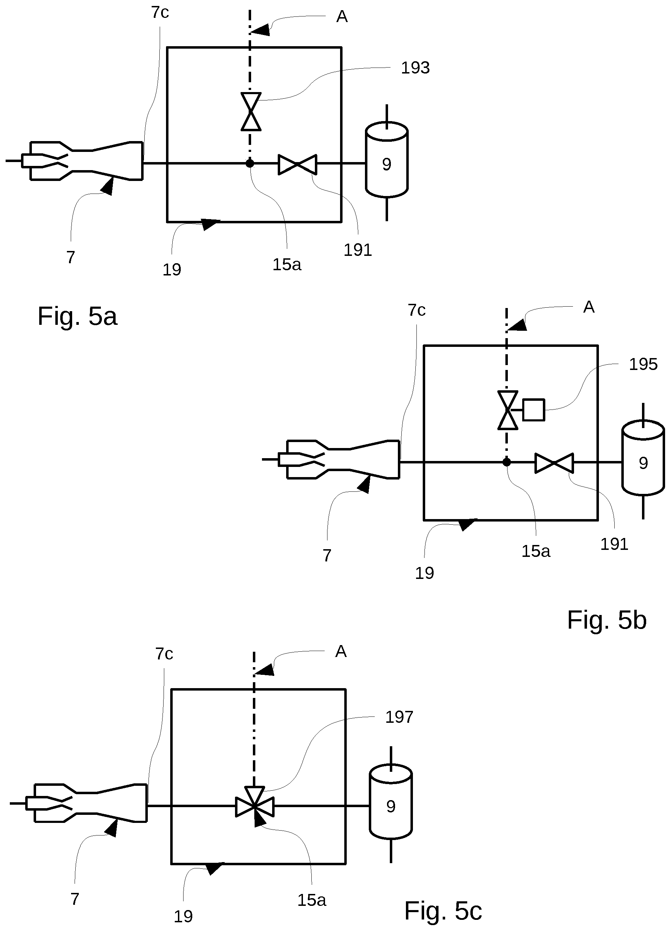

Comme illustré sur les figures 5a et 5b, le dispositif de gestion et de distribution 19 peut comporter une première vanne d'arrêt 191 disposée entre le premier point de jonction 15a et le dispositif de séparation de phases 9.

Selon un premier mode de réalisation du dispositif de gestion et de distribution 19 illustré à la figure 5a, ce dernier comporte une deuxième vanne d'arrêt 193 disposée sur la conduite de contournement A, en plus de la première vanne d'arrêt 191.

Selon un deuxième mode de réalisation du dispositif de gestion et de distribution 19 illustré à la figure 5b, ce dernier comporte une vanne à ouverture variable 195 disposée sur la conduite de contournement A, en plus de la première vanne d'arrêt 191.

Comme illustré sur la figure 5c, le dispositif de gestion et de distribution 19 peut comporter une vanne trois voies 197 à débit variable disposée au niveau du premier point de jonction 15a.

La présence du dispositif de gestion et de distribution 19 permet différents modes de fonctionnement du procédé de fonctionnement du circuit de climatisation 1 réversible. En effet, il est possible de contrôler vers où le fluide réfrigérant est dirigé. Il est même possible, selon les besoins, de faire varier la quantité de fluide réfrigérant envoyée vers le deuxième échangeur de chaleur 13 ou dans la conduite de contournement A, lorsque que le dispositif de gestion et de distribution 19 comporte une vanne à ouverture variable 195 ou une vanne trois voies 197 à débit variable.

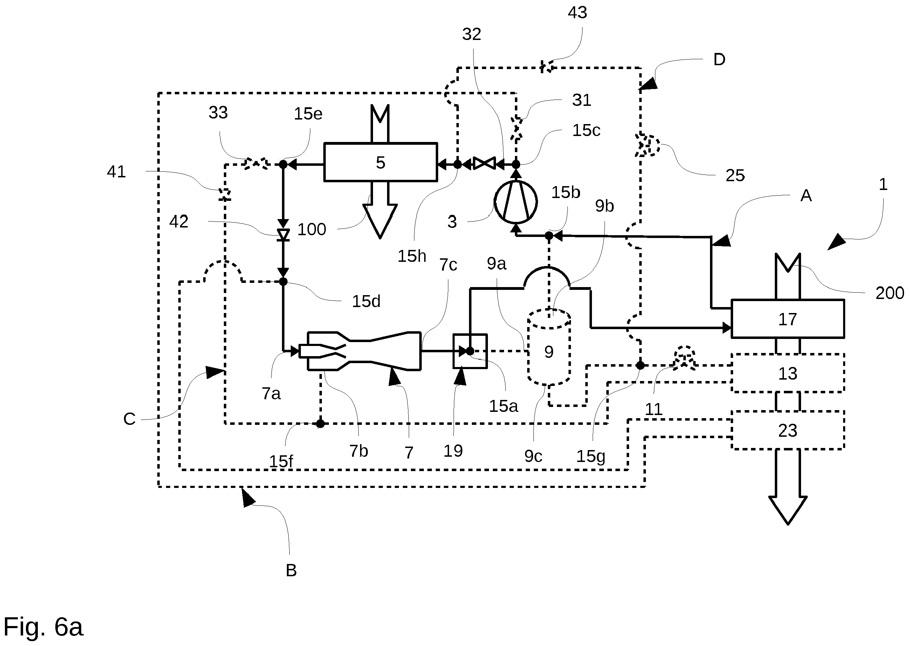

Le circuit de climatisation 1 réversible peut ainsi fonctionner selon un deuxième mode de refroidissement illustré à la figure 6a où le sens de circulation du fluide réfrigérant est représenté par des flèches. Dans ce deuxième mode de refroidissement, la totalité du fluide réfrigérant en sortie de l'éjecteur 7 est redirigée par le dispositif de gestion et de distribution 19 vers le troisième échangeur de chaleur 17.

Dans ce deuxième mode de refroidissement, le fluide réfrigérant passe successivement dans le compresseur 3, le premier échangeur de chaleur 5, l'éjecteur 7 et dans le troisième échangeur de chaleur 17 de la conduite de contournement A avant de retourner vers le compresseur 3.

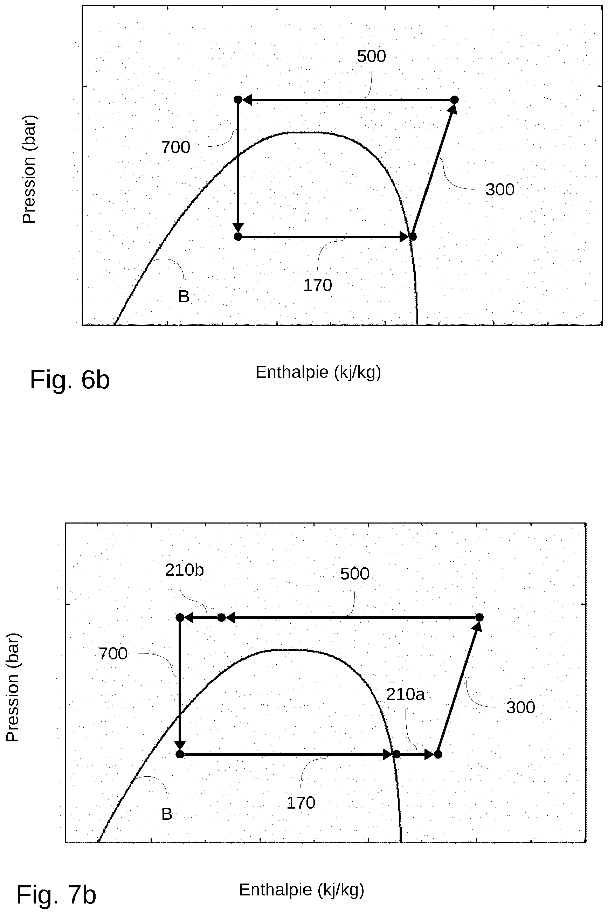

Les variations de pression et d'enthalpie que subit le fluide réfrigérant lors de ce deuxième mode de refroidissement, sont illustrées sur le diagramme pression / enthalpie de la figure 6b. La courbe B représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide. Le fluide réfrigérant perd alors de l'enthalpie tout en restant à une pression constante.

Le fluide réfrigérant passe ensuite dans la première entrée 7a de l'éjecteur 7. Le fluide réfrigérant subit une perte de pression, illustrée par la flèche 700 et croise la courbe de saturation B, ce qui le fait passer dans un état de mélange liquide plus gaz.

Le fluide réfrigérant passe ensuite dans le dispositif de gestion et de distribution 19 et est redirigé dans la conduite de contournement A.

Au sein de la conduite de contournement A, le fluide réfrigérant passe au travers du troisième échangeur de chaleur 17 où il gagne de l'enthalpie comme illustré par la flèche 170, avant de rentrer de nouveau dans le compresseur 3.

Dans ce deuxième mode de refroidissement, le dispositif de redirection du fluide réfrigérant est configuré de sorte que le fluide réfrigérant ne circule pas dans les première B, deuxième C et troisième D branches de dérivation.

Cela est notamment possible en :
- fermant la première vanne d'arrêt 31 et en ouvrant la deuxième vanne d'arrêt 32 afin que le fluide réfrigérant en sortie du compresseur 3 ne circule pas dans la première branche de dérivation B,
- fermant la troisième vanne d'arrêt 33 afin que le fluide réfrigérant en sortie du premier échangeur de chaleur 5 ne circule pas dans la deuxième branche de dérivation C,
- fermant la deuxième vanne de réglage 25 afin que le fluide réfrigérant en phase liquide en sortie du dispositif de séparation de phases 9 ne circule pas dans la troisième branche de dérivation D.

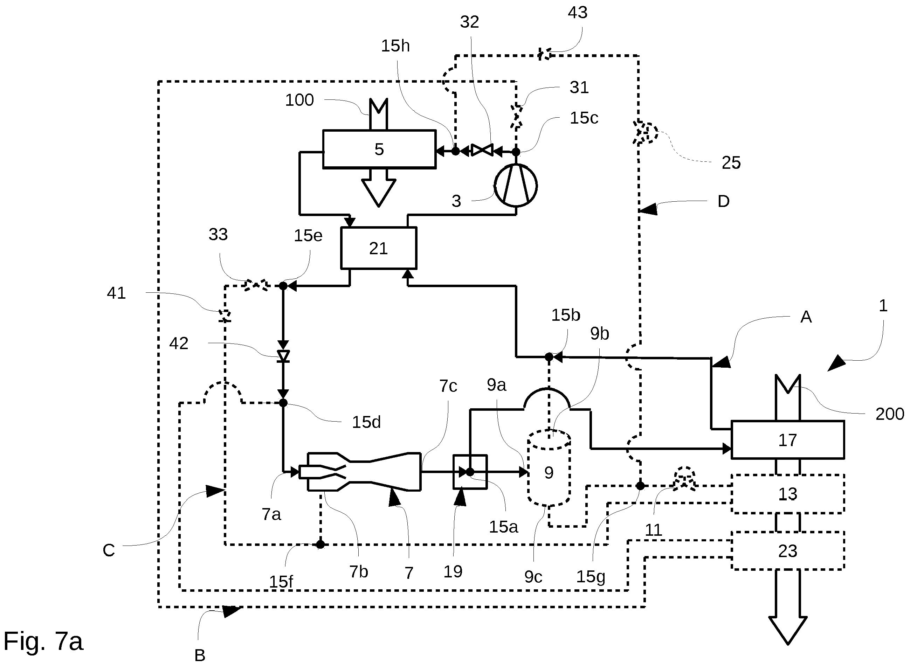

Selon une variante, le deuxième mode de refroidissement peut fonctionner lorsque le circuit de climatisation 1 réversible comporte un IHX 21 comme cela est illustré à la figure 7a. Cette variante du deuxième mode de refroidissement comporte les mêmes étapes que le deuxième mode de fonctionnement illustré à la figure 6a, à la différence que :
- avant d'arriver dans l'éjecteur 7 au niveau de la première entrée 7a, le fluide réfrigérant passe par l'IHX 21, et
- avant d'arriver dans le compresseur 3, le fluide réfrigérant en provenance de la conduite de contournement A passe également par l'IHX 21.

L'influence de l'IHX 21 est visible sur le diagramme pression /enthalpie de la figure 7b. L'IHX 21 permet une augmentation de l'enthalpie du fluide réfrigérant, illustrée par la flèche 210a, avant son entrée dans le compresseur 3. Du fait que l'enthalpie du fluide réfrigérant en entrée du compresseur 3 est plus importante, l'enthalpie du fluide réfrigérant en sortie du compresseur 3 sera elle aussi supérieure à l'enthalpie du fluide réfrigérant lorsqu'il n'y a pas d'IHX. Cette augmentation de l'enthalpie en amont du compresseur 3 est permise par la baisse de l'enthalpie du fluide réfrigérant en sortie du premier échangeur de chaleur 5, illustrée par la flèche 210b. L'IHX 21 améliore le COP en diminuant l'enthalpie du fluide réfrigérant en sortie du premier échangeur de chaleur 5 et en la transférant au fluide réfrigérant avant son entrée dans le compresseur 3.

Ce deuxième mode de refroidissement et sa variante sont des équivalents à un fonctionnement classique d'un circuit de climatisation « classique » avec et sans IHX 21. L'éjecteur 7 n'amorce pas et a ici un rôle de détendeur simple. Ce deuxième mode de réalisation est de préférence utilisé pour des températures d'air extérieur en entrée du premier échangeur de chaleur 5 inférieures à 15° C et pour des fluides réfrigérants à faible charge thermique.

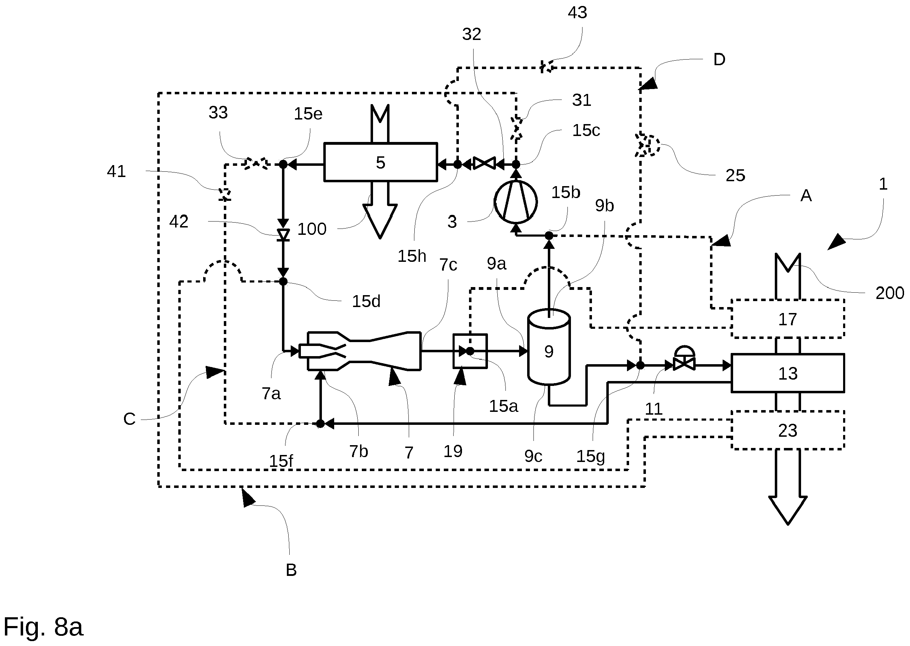

Le circuit de climatisation 1 réversible peut également fonctionner selon un troisième mode de refroidissement illustré à la figure 8a où le sens de circulation du fluide réfrigérant est représenté par des flèches. Dans ce troisième mode de refroidissement, la totalité du fluide réfrigérant en sortie de l'éjecteur 7 est redirigée par le dispositif de gestion et de distribution 19 vers le dispositif de séparation de phases 9.

Dans ce troisième mode de refroidissement, le fluide réfrigérant passe successivement dans le compresseur 3, le premier échangeur de chaleur 5, l'éjecteur 7, le dispositif de séparation de phases 9, et :
∘ la phase liquide du fluide réfrigérant passe ensuite dans la première vanne de réglage 11, le deuxième échangeur de chaleur 13, le fluide réfrigérant revenant dans l'éjecteur 7,
∘ la phase gazeuse du fluide réfrigérant retourne vers le compresseur 3.

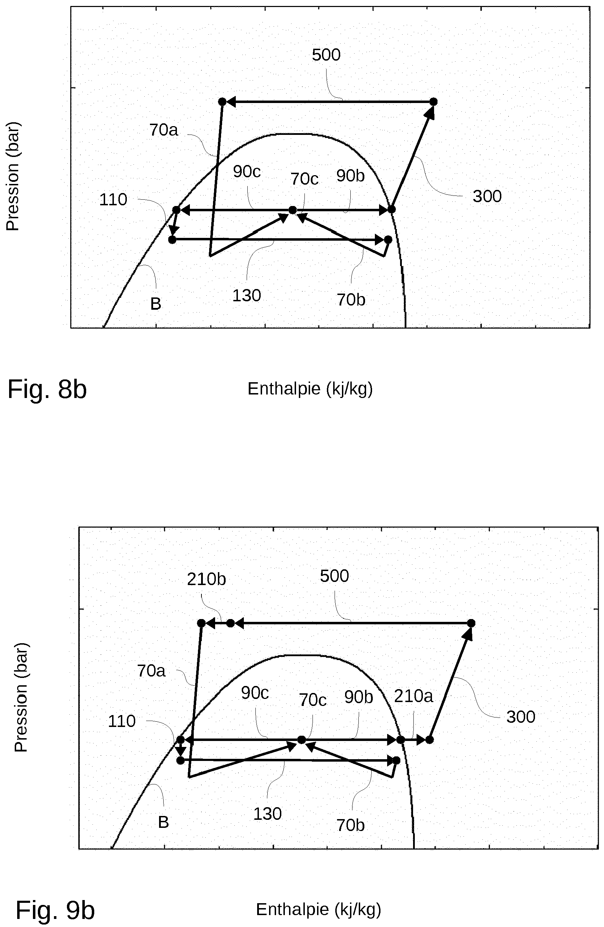

Les variations de pression et d'enthalpie que subit le fluide réfrigérant lors de ce troisième mode de refroidissement, sont illustrées sur le diagramme pression / enthalpie de la figure 8b. La courbe B représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3.

Le fluide réfrigérant traverse le premier échangeur de chaleur 5 et subit une perte d'enthalpie, illustrée par la flèche 500, du fait de la dissipation de chaleur dans le flux d'air extérieur 100 et de son passage en phase liquide. Le fluide réfrigérant perd alors de l'enthalpie tout en restant à une pression constante.

Le fluide réfrigérant passe ensuite dans la première entrée 7a de l'éjecteur 7. Le fluide réfrigérant subit une perte de pression, illustrée par la flèche 70a, et croise la courbe de saturation B, ce qui le fait passer dans un état de mélange liquide plus gaz. Le fluide réfrigérant subit ensuite une recompression dans l'éjecteur 7 pour atteindre la sortie 7c dudit l'éjecteur 7, illustrée par le point 70c.

Le fluide réfrigérant passe ensuite dans le dispositif de séparation de phases 9. Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c. Le fluide réfrigérant passe ensuite dans la première vanne de réglage 11 où il subit une perte de pression, illustrée par la flèche 110. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, comme le montre la flèche 70b.

Toujours au niveau du dispositif de séparation de phases 9, la phase gazeuse du fluide réfrigérant est quant à elle redirigée vers le compresseur 3. Du fait de la séparation de phase, le fluide réfrigérant en phase gazeuse à la première sortie 9b du dispositif de séparation de phases 9, tend à atteindre la courbe de saturation B en gagnant de l'enthalpie, comme montré par la flèche 90b.

Le COP est amélioré par rapport à un circuit de climatisation « classique » par l'action de l'éjecteur 7 qui permet au fluide réfrigérant en entrée dudit compresseur 3 d'avoir une pression supérieure à la pression où l'échange de chaleur, entre le flux d'air intérieur 200 et le fluide réfrigérant, a lieu au niveau du deuxième échangeur de chaleur 13. Moins de puissance au niveau du compresseur 3 est donc nécessaire pour atteindre la pression souhaitée en sortie du compresseur 3.

Ce troisième mode de refroidissement est de préférence utilisé pour des températures d'air extérieur en entrée du premier échangeur de chaleur 5 supérieures à 60° C et notamment lorsque le fluide réfrigérant est du R744. En effet pour de telles températures, l'éjecteur 7 fera subir au fluide réfrigérant une recompression importante et donc la pression au sein du dispositif de séparation de phases 9 sera trop importante et pourrait endommager le circuit.

Dans ce troisième mode de refroidissement, le dispositif de redirection du fluide réfrigérant est configuré de sorte que le fluide réfrigérant ne circule pas dans les première B, deuxième C et troisième D branches de dérivation.

Cela est notamment possible en :
- fermant la première vanne d'arrêt 31 et en ouvrant la deuxième vanne d'arrêt 32 afin que le fluide réfrigérant en sortie du compresseur 3 ne circule pas dans la première branche de dérivation B,
- fermant la troisième vanne d'arrêt 33 afin que le fluide réfrigérant en sortie du premier échangeur de chaleur 5 ne circule pas dans la deuxième branche de dérivation C,
- fermant la deuxième vanne de réglage 25 afin que le fluide réfrigérant en phase liquide en sortie du dispositif de séparation de phases 9 ne circule pas dans la troisième branche de dérivation D.

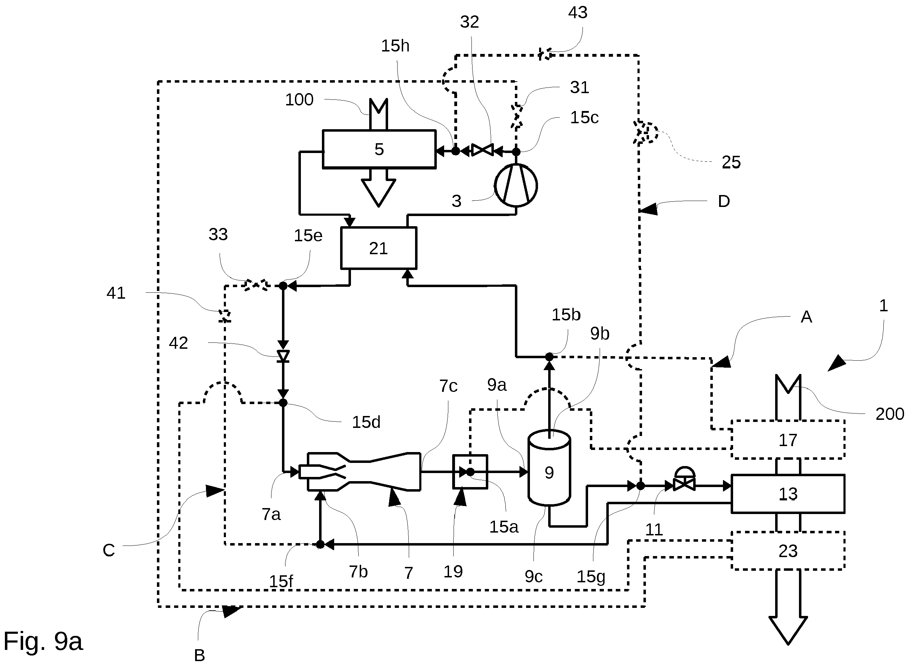

Selon une variante, le troisième mode de refroidissement peut fonctionner lorsque le circuit de climatisation 1 réversible comporte un IHX 21 comme cela est illustré à la figure 9a. Cette variante du troisième mode de refroidissement comporte les mêmes étapes que le troisième mode de refroidissement illustré à la figure 8a, à la différence que :
- avant d'arriver dans l'éjecteur 7 au niveau de la première entrée 7a, le fluide réfrigérant passe par l'IHX 21, et
- avant d'arriver dans le compresseur 3, le mélange de fluide réfrigérant issu de la première sortie 9b du dispositif de séparation de phase 9 passe également par l'IHX 21.

L'influence de l'IHX 21 est visible sur le diagramme pression /enthalpie de la figure 9b. L'IHX 21 permet une augmentation de l'enthalpie du fluide réfrigérant, illustrée par la flèche 210a, avant son entrée dans le compresseur 3. Du fait que l'enthalpie du fluide réfrigérant en entrée du compresseur 3 est plus importante, l'enthalpie du fluide réfrigérant en sortie du compresseur 3 sera elle aussi supérieure à l'enthalpie du fluide réfrigérant lorsqu'il n'y a pas d'IHX. Cette augmentation de l'enthalpie en amont du compresseur 3 est permise par la baisse de l'enthalpie du fluide réfrigérant en sortie du premier échangeur de chaleur 5, illustrée par la flèche 210b. L'IHX 21 améliore le COP en diminuant l'enthalpie du fluide réfrigérant en sortie du premier échangeur de chaleur 5 et en la transférant au fluide réfrigérant avant son entrée dans le compresseur 3.

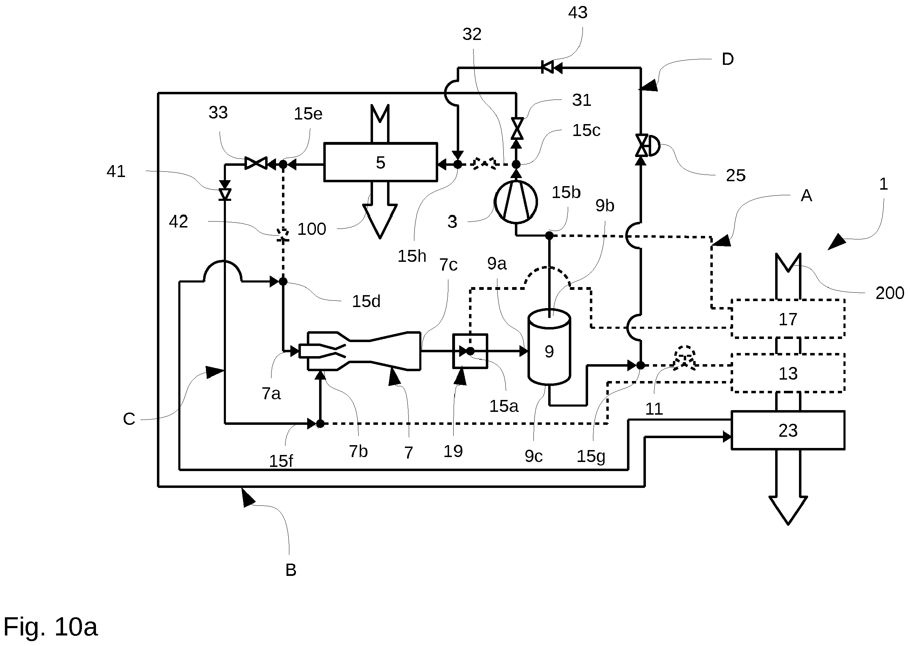

Le circuit de climatisation 1 réversible peut également fonctionner selon un mode pompe à chaleur illustré à la figure 10a, où le sens de circulation du fluide réfrigérant est représenté par des flèches. Les éléments dans lesquels le fluide réfrigérant circule sont représentés en trait plein et les éléments où le fluide réfrigérant ne circule pas sont représentés en traits pointillés.

Dans ce mode pompe à chaleur de la figure 10a, le fluide réfrigérant passe dans :
∘ le compresseur 3,
∘ le quatrième échangeur de chaleur 23 de la première branche de dérivation B,
∘ l'éjecteur 7, via sa première entrée 7a,
∘ le dispositif de séparation de phases 9, où :
   ▪ la phase liquide du fluide réfrigérant passe ensuite dans la deuxième vanne de réglage 25 de la troisième branche de dérivation D, le premier échangeur de chaleur 5 et le fluide réfrigérant revenant dans la l'éjecteur 7 via sa deuxième entrée 7b, en empruntant la deuxième branche de dérivation C,
   ▪ la phase gazeuse du fluide réfrigérant retourne vers le compresseur 3.

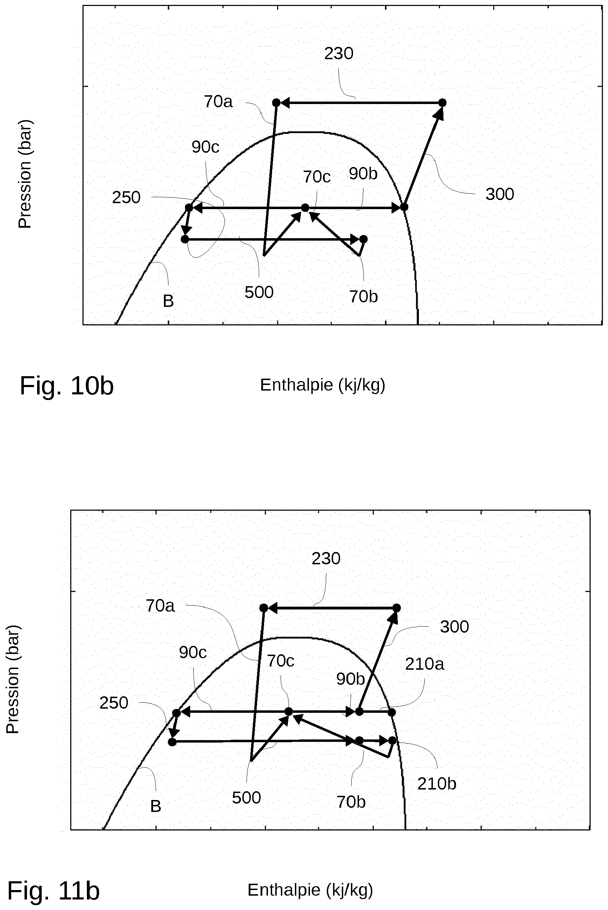

Les variations de pression et d'enthalpie que subit le fluide réfrigérant lors de ce mode pompe à chaleur, sont illustrées sur le diagramme pression / enthalpie de la figure 10b. La courbe B représente la courbe de saturation du fluide réfrigérant.

Le fluide réfrigérant à l'entrée du compresseur 3 est en phase gazeuse et subit une compression, illustrée par la flèche 300, en passant dans ledit compresseur 3.

Le fluide réfrigérant passe dans la première branche de dérivation B et traverse le quatrième échangeur de chaleur 23 et subit une perte d'enthalpie, illustrée par la flèche 230, du fait de la dissipation de chaleur dans le flux d'air intérieur 200 et de son passage en phase liquide.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit l'éjecteur 7, illustrée par le point 70c.

Le dispositif de gestion et de distribution 19 est ici configuré pour que le fluide réfrigérant en sortie de l'éjecteur 7 passe ensuite uniquement dans le dispositif de séparation de phases 9, dans lequel :
- la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c. Le fluide réfrigérant passe ensuite dans la troisième branche de dérivation D et la deuxième vanne de réglage 25 où il subit une perte de pression, illustrée par la flèche 250. Le fluide réfrigérant traverse ensuite le premier échangeur de chaleur 5 où il subit une évaporation, illustrée par la flèche 500. Le fluide réfrigérant lors de sa traversée du premier échangeur de chaleur 5 absorbe de l'énergie calorifique du flux d'air extérieur 100. Le fluide réfrigérant repasse ensuite dans l'éjecteur 7 via sa deuxième entrée 7b en passant par la deuxième branche de dérivation C. Le fluide réfrigérant subit de nouveau une perte de pression puis une recompression dans l'éjecteur 7 pour rejoindre le point 70c, comme le montre la flèche 70b,
- la phase gazeuse du fluide réfrigérant est redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b.

Dans ce mode pompe à chaleur, le dispositif de redirection du fluide réfrigérant est configuré de sorte que le fluide réfrigérant circule dans les première B, deuxième C et troisième D branches de dérivation.

Cela est notamment possible en :
- ouvrant la première vanne d'arrêt 31 et en fermant la deuxième vanne d'arrêt 32, afin que le fluide réfrigérant en sortie du compresseur 3 circule uniquement dans la première branche de dérivation B,
- ouvrant la troisième vanne d'arrêt 33 afin que le fluide réfrigérant en sortie du premier échangeur de chaleur 5 circule uniquement dans la deuxième branche de dérivation C,
- fermant la première vanne de réglage 11 afin que le fluide réfrigérant en phase liquide en sortie du dispositif de séparation de phases 9 circule uniquement dans la troisième branche de dérivation D.

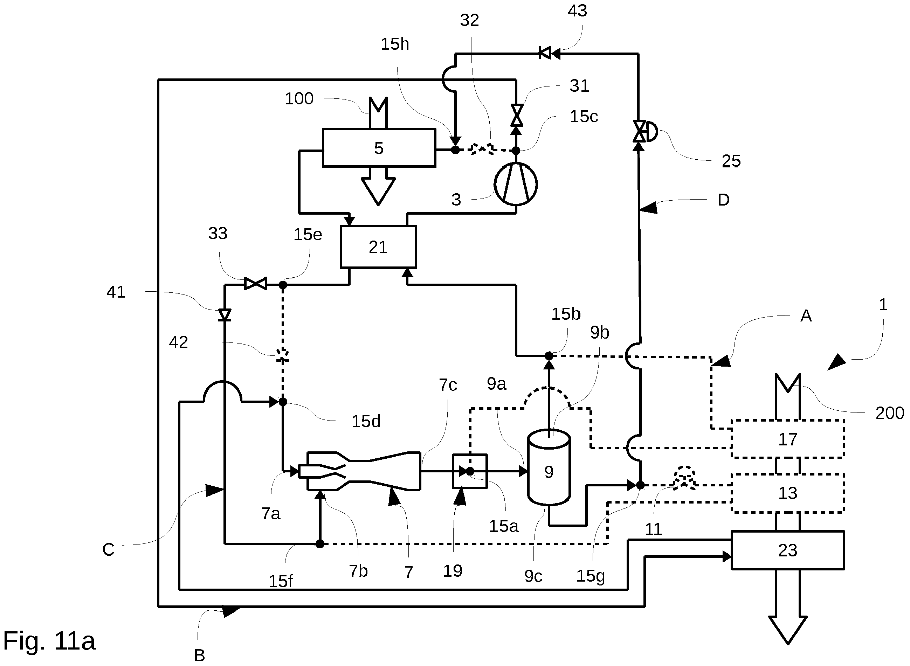

Selon une première variante, le mode pompe à chaleur peut fonctionner lorsque le circuit de climatisation 1 réversible comporte un IHX 21, comme cela est illustré à la figure 11a. Cette première variante du mode pompe à chaleur comporte les mêmes étapes que le mode pompe à chaleur illustré à la figure 10a, à la différence que :
- le fluide réfrigérant en phase gazeuse en sortie du dispositif de séparation de phases 9 passe par l'IHX 21 avant de rejoindre le compresseur 3, et
- le fluide réfrigérant en sortie du premier échangeur de chaleur 5 passe par l'IHX 21 avant de rejoindre la deuxième entrée 7b de l'éjecteur 7.

L'influence de l'IHX 21 est visible sur le diagramme pression /enthalpie de la figure 11b. L'IHX 21 permet une diminution de l'enthalpie du fluide réfrigérant, illustrée par la flèche 210a, avant son entrée dans le compresseur 3. Cette diminution de l'enthalpie en amont du compresseur 3 est permise par l'augmentation de l'enthalpie du fluide réfrigérant en sortie du premier échangeur de chaleur 5, illustrée par la flèche 210b.

Il est également possible d'imaginer une deuxième variante du mode pompe à chaleur (non représentée) dans laquelle, en sortie de l'éjecteur 7, une portion du fluide réfrigérant est redirigée par le dispositif de gestion et de distribution 19 vers le dispositif de séparation de phases 9 comme précédemment, et une autre portion de fluide réfrigérant en provenance de l'éjecteur 7 passe par le troisième échangeur de chaleur 17 de la conduite de contournement A avant de retourner vers le compresseur 3, via le deuxième point de jonction 15b.

Cette deuxième variante permet de faire en sorte qu'à la fois le quatrième 23 et le troisième 17 échangeurs de chaleur redistribuent de la chaleur au flux d'air intérieur 200 pour une meilleur efficacité, en effet, les surfaces d'échanges des quatrième 23 et troisième échangeurs de chaleur s'additionnent.

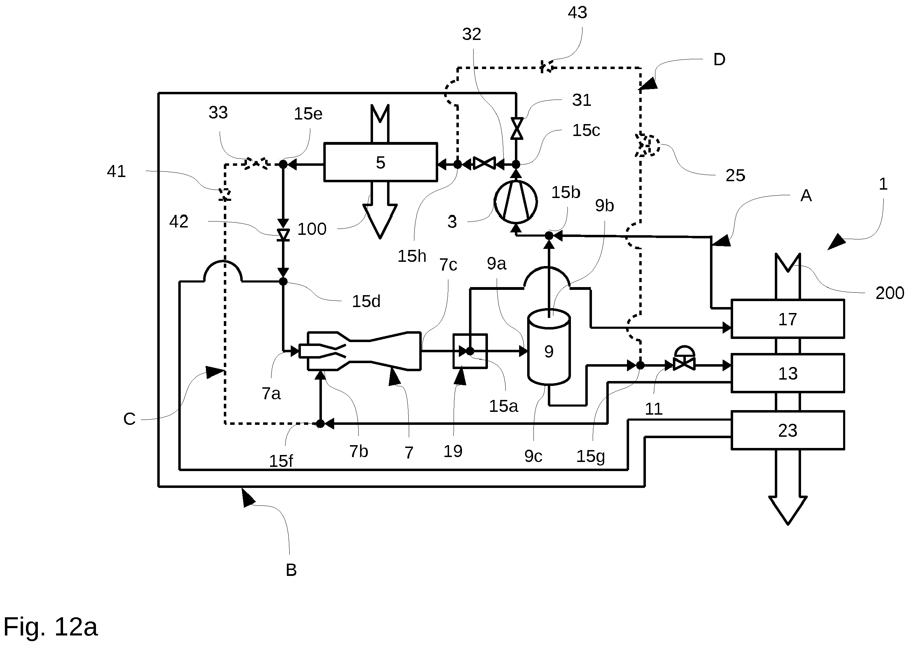

Le circuit de climatisation 1 réversible peut également fonctionner selon un premier mode de déshumidification illustré à la figure 12a, où le sens de circulation du fluide réfrigérant est représenté par des flèches. Les éléments dans lesquels le fluide réfrigérant circule sont représentés en trait plein et les éléments où le fluide réfrigérant ne circule pas sont représentés en traits pointillés.

Dans ce premier mode de déshumidification, le fluide réfrigérant passe successivement dans :
∘ le compresseur 3,
∘ une portion du fluide réfrigérant en provenance du compresseur 3 passe ensuite dans :
   ▪ le premier échangeur de chaleur 5
   ▪ l'éjecteur 7, via sa première entrée 7a,
      - une portion de fluide réfrigérant en sortie de l'éjecteur 7 passe par le dispositif de séparation de phases 9, et :
         ∘ la phase liquide du fluide réfrigérant passe ensuite dans la premère vanne de réglage 11, le deuxième échangeur de chaleur 13, le fluide réfrigérant revenant dans l'éjecteur 7 via sa deuxième entrée 7b,
         ∘ la phase gazeuse du fluide réfrigérant retourne vers le compresseur 3, et
      - une autre portion du fluide réfrigérant en sortie de l'éjecteur 7 passe par le troisième échangeur de chaleur 17 de la conduite de contournement A avant de retourner vers le compresseur 3,
∘ une autre portion du fluide réfrigérant en provenance du compresseur 3 passe dans le quatrième échangeur de chaleur 23 de la première branche de dérivation B, avant de retourner dans l'éjecteur 7, via sa première entrée 7a.

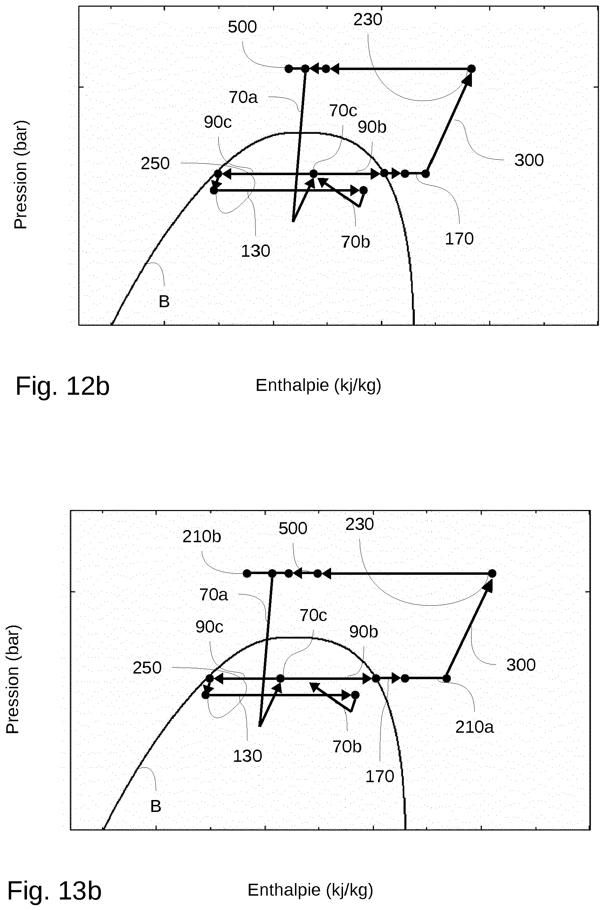

Les variations de pression et d'enthalpie que subit le fluide réfrigérant lors de ce premier mode de déshumidification, sont illustrées sur le diagramme pression / enthalpie de la figure 12b. La courbe B représente la courbe de saturation du fluide réfrigérant.

Le fluide réfrigérant à l'entrée du compresseur 3 est en phase gazeuse et subit une compression, illustrée par la flèche 300, en passant dans ledit compresseur 3.

Une portion du fluide réfrigérant en sortie du compresseur 3 traverse ensuite le premier échangeur de chaleur 5 et subit une perte d'enthalpie, illustrée par la flèche 500, du fait de la dissipation de chaleur dans le flux d'air extérieur 100 et de son passage en phase liquide.

Une autre portion de fluide réfrigérant en provenance du compresseur 3 passe au travers du quatrième échangeur de chaleur 23 et subit une perte d'enthalpie, illustrée par la flèche 230, du fait de la dissipation de chaleur dans le flux d'air intérieur 200 et de son passage en phase liquide.

Le fluide réfrigérant provenant du quatrième échangeur de chaleur 23 rejoint et se mélange ensuite avec le fluide réfrigérant en provenance du premier échangeur de chaleur 5 au niveau du quatrième point de jonction 15d.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit l'éjecteur 7, illustrée par le point 70c.

Une partie du fluide réfrigérant passe ensuite dans le dispositif de séparation de phases 9, alors que l'autre partie du fluide réfrigérant passe dans la conduite de contournement A.

Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c. Le fluide réfrigérant passe ensuite dans la première vanne de réglage 11 où il subit une perte de pression, illustrée par la flèche 110. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, comme le montre la flèche 70b.

Toujours au niveau du dispositif de séparation de phases 9, la phase gazeuse du fluide réfrigérant est quant à elle redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b. Avant d'atteindre le compresseur 3, le fluide réfrigérant issu de la première sortie 9a du dispositif de séparation de phases 9 se mélange au niveau du deuxième point de jonction 15b avec le fluide réfrigérant en provenance de la conduite de contournement A.

Au sein de la conduite de contournement A, le fluide réfrigérant passe au travers du troisième échangeur de chaleur 17 où il gagne de l'enthalpie comme illustré par la flèche 170. Ce mélange entre le fluide réfrigérant en phase gazeuse issu du dispositif de séparation de phases 9 et le fluide réfrigérant issu de la conduite de contournement A, permet au fluide réfrigérant de dépasser la courbe de saturation B. Le fluide réfrigérant est donc en état de gaz surchauffé avant d'entrer dans le compresseur 3.

Dans ce premier mode de déshumidification, le dispositif de redirection du fluide réfrigérant est configuré de sorte que le fluide réfrigérant circule dans la première branche de dérivation B mais ne circule pas dans les deuxième C et troisième D branches de dérivation.

Cela est notamment possible en :
- ouvrant les première 31 et deuxième 32 vannes d'arrêt afin que le fluide réfrigérant en sortie du compresseur 3 circule à la fois dans la première branche de dérivation B et en direction du premier échangeur de chaleur 5,
- fermant la troisième vanne d'arrêt 33 afin que le fluide réfrigérant en sortie du premier échangeur de chaleur 5 ne circule pas dans la deuxième branche de dérivation C,
- fermant la deuxième vanne de réglage 25 afin que le fluide réfrigérant en phase liquide en sortie du dispositif de séparation de phases 9 ne circule pas dans la troisième branche de dérivation D.

Le deuxième clapet antiretour 42 permet d'éviter que le fluide réfrigérant en provenance du quatrième échangeur de chaleur 23 qui est à haute pression ne remonte vers le premier échangeur de chaleur 5 et ne refoule le fluide réfrigérant à basse pression qui le traverse.

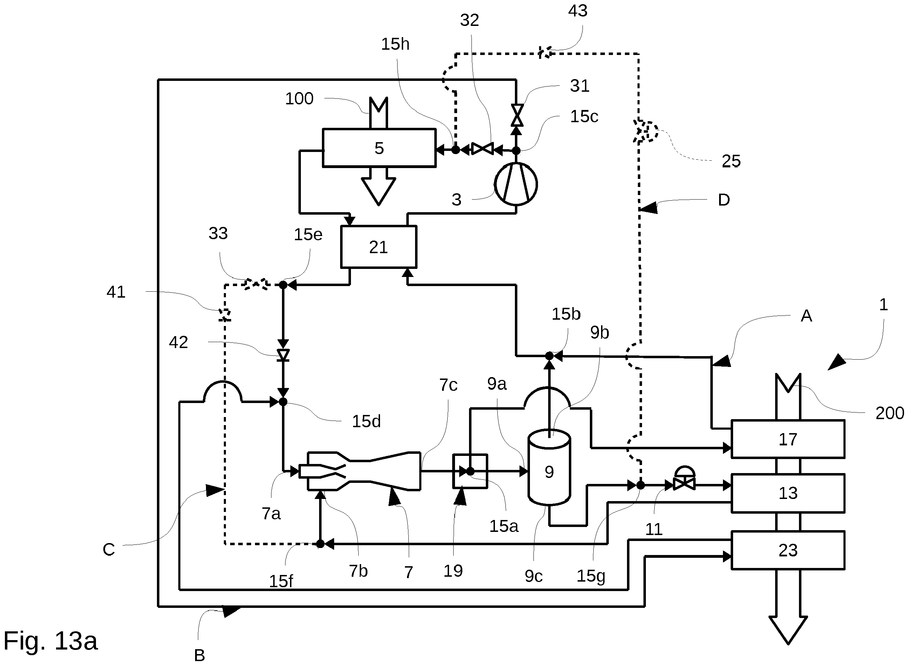

Selon une variante, le premier mode de déshumidification peut fonctionner lorsque le circuit de climatisation 1 réversible comporte un IHX 21, comme cela est illustré à la figure 13a. Cette variante du premier mode de déshumidification comporte les mêmes étapes que le premier mode de déshumidification illustré à la figure 12a, à la différence que le fluide réfrigérant en phase gazeuse en sortie du dispositif de séparation de phases 9, mélangé avec le fluide en provenance du troisième échangeur de chaleur 17, passe par l'IHX 21 avant de rejoindre le compresseur 3, et
- le fluide réfrigérant en sortie du premier échangeur de chaleur 5 passe par l'IHX 21 avant de se mélanger avec le fluide réfrigérant en provenance du quatrième échangeur de chaleur 23.

L'influence de l'IHX 21 est visible sur le diagramme pression /enthalpie de la figure 13b. L'IHX 21 permet une augmentation de l'enthalpie du fluide réfrigérant, illustrée par la flèche 210a, avant son entrée dans le compresseur 3. Du fait que l'enthalpie du fluide réfrigérant en entrée du compresseur 3 est plus importante, l'enthalpie du fluide réfrigérant en sortie du compresseur 3 sera elle aussi supérieure à l'enthalpie du fluide réfrigérant lorsqu'il n'y a pas d'IHX. Cette augmentation de l'enthalpie en amont du compresseur 3 est permise par la baisse de l'enthalpie du fluide réfrigérant en sortie du premier échangeur de chaleur 5, illustrée par la flèche 210b. L'IHX 21 améliore le COP en diminuant l'enthalpie du fluide réfrigérant en sortie du premier échangeur de chaleur 5 et en la transférant au fluide réfrigérant avant son entrée dans le compresseur 3.

Ce premier mode de déshumidification permet la déshumidification du flux d'air intérieur 200 du fait que ce dernier est dans un premier temps refroidi par les deuxième 13 et troisième 17 échangeurs de chaleur et dans un second temps réchauffé par le quatrième échangeur de chaleur 13 avant d'arriver dans l'habitacle. Ce premier mode de déshumidification est ainsi adapté pour fournir un air chaud et sec dans l'habitacle.

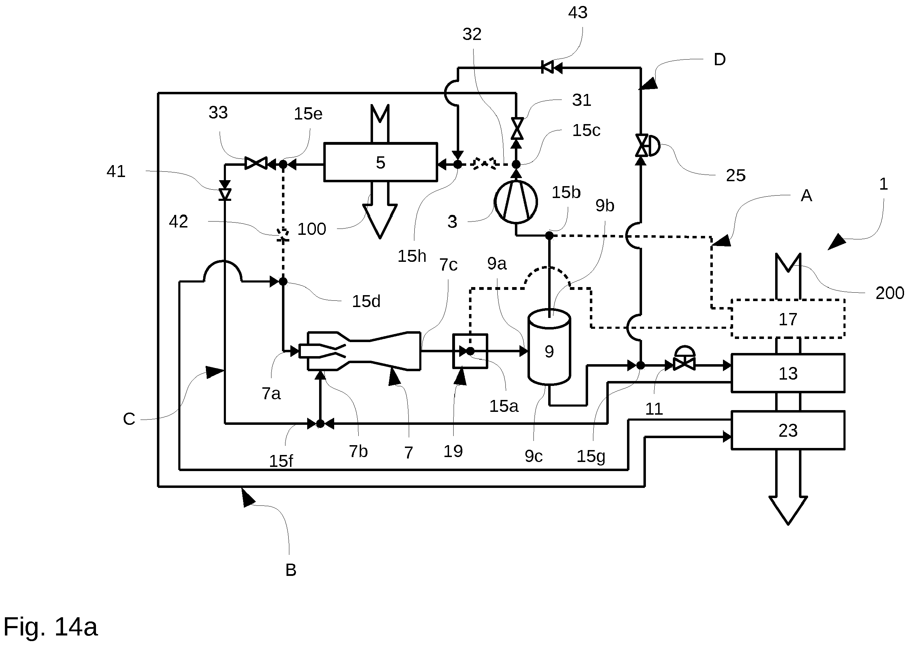

Le circuit de climatisation 1 réversible peut également fonctionner selon un deuxième mode de déshumidification illustré à la figure 14a, où le sens de circulation du fluide réfrigérant est représenté par des flèches. Les éléments dans lesquels le fluide réfrigérant circule sont représentés en trait plein et les éléments où le fluide réfrigérant ne circule pas sont représentés en traits pointillés.

Dans ce deuxième mode de déshumidification, le fluide réfrigérant passe successivement dans :
∘ le compresseur 3,
∘ le quatrième échangeur de chaleur 23 de la première branche de dérivation B,
∘ l'éjecteur 7, via sa première entrée 7a,
∘ le dispositif de séparation de phases 9, où :
   ▪ une portion du fluide réfrigérant en phase liquide passe dans la deuxième vanne de réglage 25 de la troisième branche de dérivation D, le premier échangeur de chaleur 5, le fluide réfrigérant revenant dans l'éjecteur 7 via sa deuxième entrée 7b, en empruntant la deuxième branche de dérivation C,
   ▪ une autre portion du fluide réfrigérant en phase liquide passe dans la première vanne de réglage 11, le deuxième échangeur de chaleur 13, le fluide réfrigérant revenant dans l'éjecteur 7 via sa deuxième entrée 7b, et
   ▪ la phase gazeuse du fluide réfrigérant retourne vers le compresseur 3.

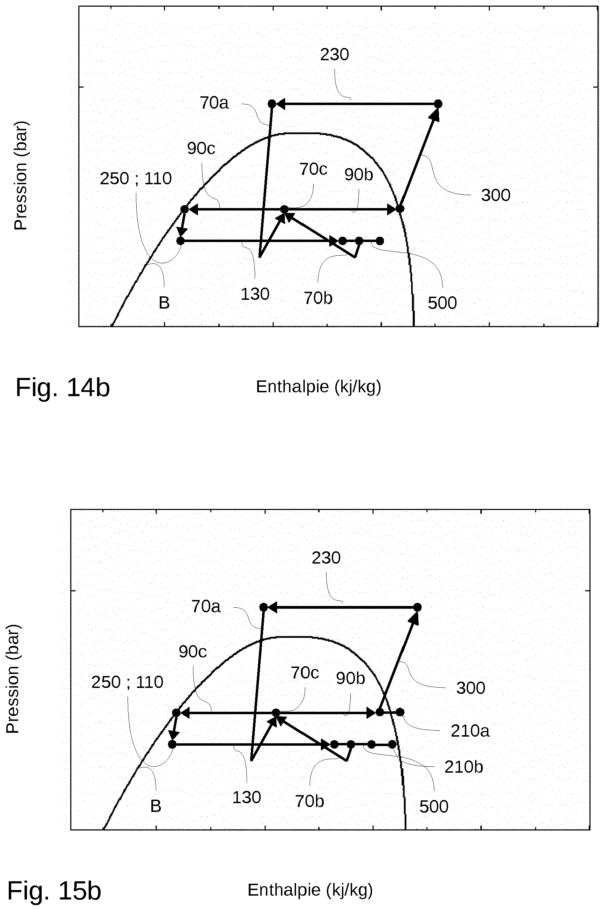

Les variations de pression et d'enthalpie que subit le fluide réfrigérant lors de ce deuxième mode de déshumidification, sont illustrées sur le diagramme pression / enthalpie de la figure 14b. La courbe B représente la courbe de saturation du fluide réfrigérant.

Le fluide réfrigérant à l'entrée du compresseur 3 est en phase gazeuse et subit une compression, illustrée par la flèche 300, en passant dans ledit compresseur 3.

Le fluide réfrigérant passe dans la première branche de dérivation B et traverse le quatrième échangeur de chaleur 23 et subit une perte d'enthalpie, illustrée par la flèche 230, du fait de la dissipation de chaleur dans le flux d'air intérieur 200 et de son passage en phase liquide.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit l'éjecteur 7, illustrée par le point 70c.

Le dispositif de gestion et de distribution 19 est ici configuré pour que le fluide réfrigérant en sortie de l'éjecteur 7 passe ensuite uniquement dans le dispositif de séparation de phases 9, dans lequel :
- la phase gazeuse du fluide réfrigérant est redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b,
- la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c.
   ∘ une portion du fluide réfrigérant en phase liquide passe ensuite dans la troisième branche de dérivation D et la deuxième vanne de réglage 25 où il subit une perte de pression, illustrée par la flèche 250. Le fluide réfrigérant traverse ensuite le premier échangeur de chaleur 5 où il subit une évaporation, illustrée par la flèche 500. Le fluide réfrigérant lors de sa traversée du premier échangeur de chaleur 5 absorbe de l'énergie calorifique du flux d'air extérieur 100,
   ∘ une autre portion du fluide réfrigérant en phase liquide passe quant à elle dans la première vanne de réglage 11 où il subit une perte de pression, illustrée par la flèche 110. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200.
   ∘ le fluide réfrigérant issu du premier échangeur de chaleur 5 passe ensuite dans la deuxième branche de dérivation C et se mélange avec le fluide réfrigérant issu du deuxième échangeur de chaleur 13 au niveau du sixième point de jonction 15f.
   ∘ le fluide réfrigérant de repasse ensuite dans l'éjecteur 7 via sa deuxième entrée 7b. Le fluide réfrigérant subit de nouveau une perte de pression puis une recompression dans l'éjecteur 7 pour rejoindre le point 70c, comme le montre la flèche 70b.

Dans ce deuxième mode de déshumidification, le dispositif de redirection du fluide réfrigérant est configuré de sorte que le fluide réfrigérant circule dans les première B, deuxième C et troisième D branches de dérivation.

Cela est notamment possible en :
- ouvrant la première vanne d'arrêt 31 et en fermant la deuxième vanne d'arrêt 32, afin que le fluide réfrigérant en sortie du compresseur 3 circule uniquement dans la première branche de dérivation B,
- ouvrant la troisième vanne d'arrêt 33 afin que le fluide réfrigérant en sortie du premier échangeur de chaleur 5 circule uniquement dans la deuxième branche de dérivation C,
- ouvrant la première vanne de réglage 11 et la deuxième vanne de réglage afin que le fluide réfrigérant en phase liquide en sortie du dispositif de séparation de phases 9 circule dans la troisième branche de dérivation D et vers le deuxième échangeur de chaleur 13.

Le deuxième clapet antiretour 42 permet d'éviter que le fluide réfrigérant en provenance du quatrième échangeur de chaleur 23 qui est à haute pression ne remonte vers le premier échangeur de chaleur 5 et ne refoule le fluide réfrigérant à basse pression qui le traverse.

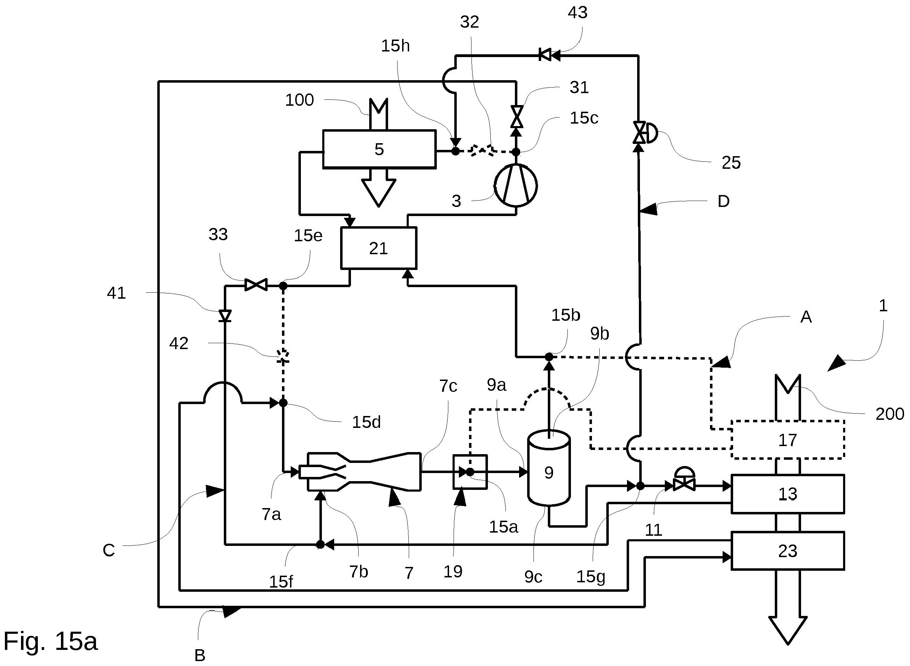

Selon une variante, le deuxième mode de déshumidification peut fonctionner lorsque le circuit de climatisation 1 réversible comporte un IHX 21, comme cela est illustré à la figure 15a. Cette variante du deuxième mode de déshumidification comporte les mêmes étapes que le deuxième mode de déshumidification illustré à la figure 14a, à la différence que :
- le fluide réfrigérant en phase gazeuse en sortie du dispositif de séparation de phases 9 passe par l'IHX 21 avant de rejoindre le compresseur 3, et
- le fluide réfrigérant en sortie du premier échangeur de chaleur 5 passe par l'IHX 21 avant de rejoindre la deuxième entrée 7b de l'éjecteur 7.

L'influence de l'IHX 21 est visible sur le diagramme pression /enthalpie de la figure 15b. L'IHX 21 permet une diminution de l'enthalpie du fluide réfrigérant, illustrée par la flèche 210a, avant son entrée dans le compresseur 3. Cette diminution de l'enthalpie en amont du compresseur 3 est permise par l'augmentation de l'enthalpie du fluide réfrigérant en sortie du premier échangeur de chaleur 5, illustrée par la flèche 210b.

Ce deuxième mode de déshumidification permet la déshumidification du flux d'air intérieur 200 du fait que ce dernier est dans un premier temps refroidit par le deuxième échangeur de chaleur 13 et dans un second temps réchauffé par le quatrième échangeur de chaleur 23 avant d'arrivé dans l'habitacle. Ce deuxième mode de déshumidification est ainsi adapté pour fournir un air chaud et sec dans l'habitacle.

Il est également possible d'imaginer une deuxième variante du deuxième mode de déshumidification (non représentée) dans laquelle, en sortie de l'éjecteur 7, une portion du fluide réfrigérant est redirigée par le dispositif de gestion et de distribution 19 vers le dispositif de séparation de phases 9 comme précédemment, et une autre portion de fluide réfrigérant en provenance de l'éjecteur 7 passe par le troisième échangeur de chaleur 17 de la conduite de contournement A avant de retourner vers le compresseur 3, via le deuxième point de jonction 15b.

Cette deuxième variante du deuxième mode de déshumidification, permet de faire en sorte qu'à la fois le quatrième 23 et le troisième 17 échangeurs de chaleur redistribue de la chaleur au flux d'air intérieur 200 pour une meilleur efficacité.

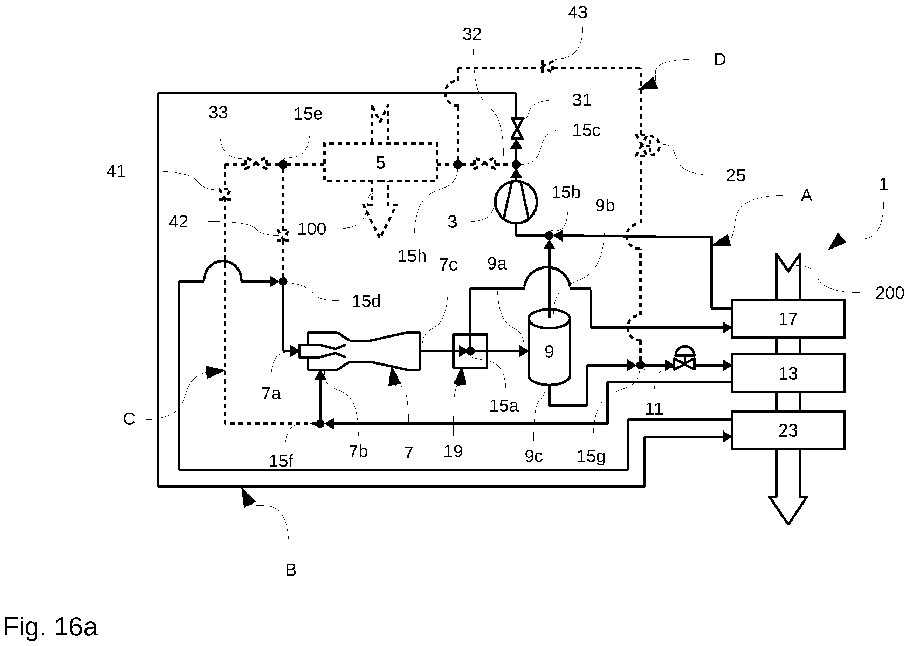

Le circuit de climatisation 1 réversible peut également fonctionner selon un mode de récupération de chaleur illustré à la figure 16a, où le sens de circulation du fluide réfrigérant est représenté par des flèches. Les éléments dans lesquels le fluide réfrigérant circule sont représentés en trait plein et les éléments où le fluide réfrigérant ne circule pas sont représentés en traits pointillés.

Dans ce mode de récupération de chaleur, le fluide réfrigérant passe successivement dans :
∘ le compresseur 3,
∘ le quatrième échangeur de chaleur 23 de la première branche de dérivation B,
∘ l'éjecteur 7, via sa première entrée 7a,
   - une portion de fluide réfrigérant en sortie de l'éjecteur 7 passant par le dispositif de séparation de phases (9), et :
      ∘ la phase liquide du fluide réfrigérant passe ensuite dans la première vanne de réglage 11, le deuxième échangeur de chaleur 13, le fluide réfrigérant revenant dans l'éjecteur 7 via sa deuxième entrée 7b,
      ∘ la phase gazeuse du fluide réfrigérant retourne vers le compresseur 3, et
   - une autre portion du fluide réfrigérant en sortie de l'éjecteur 7 passant par le troisième échangeur de chaleur 17 de la conduite de contournement A avant de retourner vers le compresseur 3.

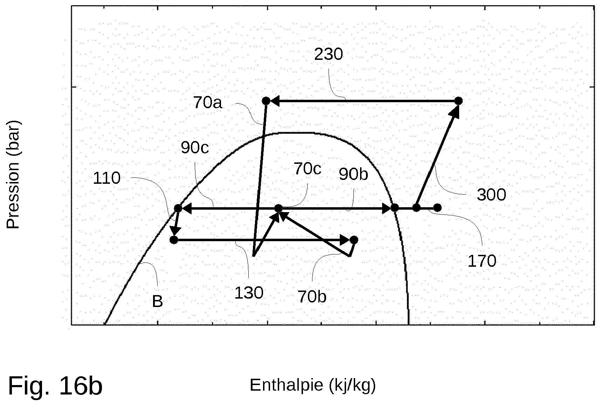

Les variations de pression et d'enthalpie que subit le fluide réfrigérant lors de ce mode de récupération de chaleur, sont illustrées sur le diagramme pression / enthalpie de la figure 16b. La courbe B représente la courbe de saturation du fluide réfrigérant.

Le fluide réfrigérant à l'entrée du compresseur 3 est en phase gazeuse et subit une compression, illustrée par la flèche 300, en passant dans ledit compresseur 3.

Le fluide réfrigérant passe dans la première branche de dérivation B et traverse le quatrième échangeur de chaleur 23 et subit une perte d'enthalpie, illustrée par la flèche 230, du fait de la dissipation de chaleur dans le flux d'air intérieur 200 et de son passage en phase liquide.

Le fluide réfrigérant passe ensuite dans la première entrée 7a de l'éjecteur 7. Le fluide réfrigérant subit une perte de pression, illustrée par la flèche 70a et croise la courbe de saturation B, ce qui le fait passer dans un état de mélange liquide plus gaz. Le fluide réfrigérant subit ensuite une recompression dans l'éjecteur 7, pour atteindre la sortie 7c dudit éjecteur 7, illustrée par le point 70c.

Une partie du fluide réfrigérant passe ensuite dans le dispositif de séparation de phases 9, alors que l'autre partie du fluide réfrigérant passe dans la conduite de contournement A.

Au niveau du dispositif de séparation de phases 9, la phase liquide du fluide réfrigérant est séparée de la phase gazeuse. De ce fait, l'enthalpie du fluide réfrigérant en phase liquide à la deuxième sortie 9c du dispositif de séparation de phases 9, diminue pour rejoindre la courbe de saturation B. Cette diminution est illustrée par la flèche 90c. Le fluide réfrigérant passe ensuite dans la première vanne de réglage 11 où il subit une perte de pression, illustrée par la flèche 110. Le fluide réfrigérant traverse ensuite le deuxième échangeur de chaleur 13 où il subit une évaporation, illustrée par la flèche 130. Le fluide réfrigérant lors de sa traversée du deuxième échangeur de chaleur 13 absorbe de l'énergie calorifique du flux d'air intérieur 200. Le fluide réfrigérant repasse ensuite dans l'éjecteur 7 via sa deuxième entrée 7b, il subit de nouveau une perte de pression puis une recompression dans l'éjecteur 7 pour rejoindre le point 70c, comme le montre la flèche 70b.

Toujours au niveau du dispositif de séparation de phases 9, la phase gazeuse du fluide réfrigérant est quant à elle redirigée vers le compresseur 3. Du fait de la séparation de phases, le fluide réfrigérant en phase gazeuse à la première sortie 9b du dispositif de séparation de phases 9, tend à atteindre la courbe de saturation B en gagnant de l'enthalpie, comme le montre la flèche 90b. Avant d'atteindre le compresseur 3 le fluide réfrigérant issu de la première sortie 9a du dispositif de séparation de phases 9 se mélange au niveau du deuxième point de jonction 15b avec le fluide réfrigérant en provenance de la conduite de contournement A.

Au sein de la conduite de contournement A, le fluide réfrigérant passe au travers du troisième échangeur de chaleur 17 où il gagne de l'enthalpie comme illustré par la flèche 170. Ce mélange entre le fluide réfrigérant en phase gazeuse issu du dispositif de séparation de phases 9 et le fluide réfrigérant issu de la conduite de contournement A, permet au fluide réfrigérant de dépasser la courbe de saturation B. Le fluide réfrigérant est donc en état de gaz surchauffé avant d'entrer dans le compresseur 3.

Dans ce mode de récupération de chaleur, le dispositif de redirection du fluide réfrigérant est configuré de sorte que le fluide réfrigérant circule dans la première branche de dérivation B mais ne circule pas dans les deuxième C et troisième D branches de dérivation.

Cela est notamment possible en :
- ouvrant la première vanne d'arrêt 31 et en fermant la deuxième vanne d'arrêt 32, afin que le fluide réfrigérant en sortie du compresseur 3 circule uniquement dans la première branche de dérivation B,
- fermant la troisième vanne d'arrêt 33 afin que le fluide réfrigérant en sortie du premier échangeur de chaleur 5 ne circule pas dans la deuxième branche de dérivation C,
- fermant la deuxième vanne de réglage 25 afin que le fluide réfrigérant en phase liquide en sortie du dispositif de séparation de phases 9 ne circule pas dans la troisième branche de dérivation D.

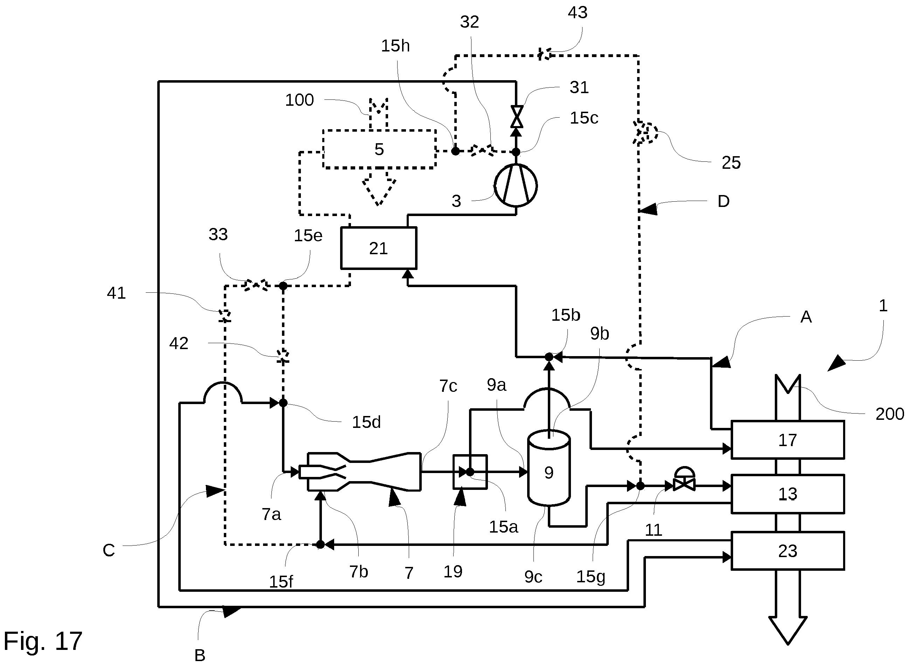

Selon une variante, le mode de récupération de chaleur peut fonctionner lorsque le circuit de climatisation 1 réversible comporte un IHX 21, comme cela est illustré à la figure 17. Cette variante du deuxième mode de déshumidification comporte les mêmes étapes que le deuxième mode de déshumidification illustré à la figure 16a, à la différence que le fluide réfrigérant en phase gazeuse en sortie du dispositif de séparation de phases 9, mélangé avec le fluide en provenance du troisième échangeur de chaleur 17, passe par l'IHX 21 avant de rejoindre le compresseur 3.

Cependant, l'IHX 21 n'a pas d'influence sur le diagramme pression /enthalpie de ce mode de récupération de chaleur car le fluide réfrigérant ne circule que dans un seul des côtés de l'IHX 21. Il n'y a donc pas ou peu de variation d'enthalpie du fait de l'IHX 21 dans ce mode de fonctionnement.

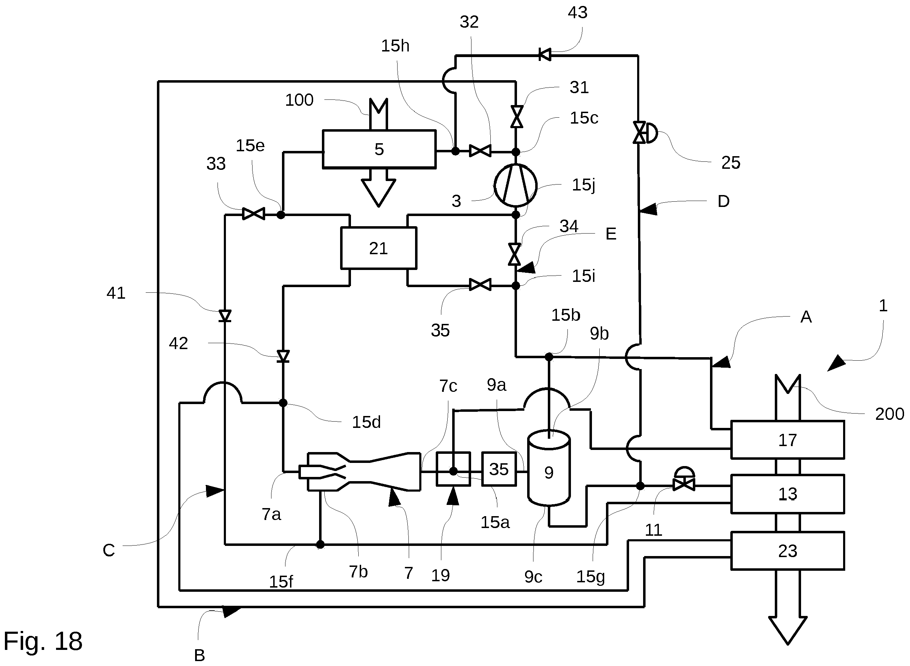

Selon un mode de réalisation particulier illustré à la figure 18, le cinquième point de jonction 15e peut être disposé en amont de l'IHX 21. Cela permet notamment dans le mode pompe à chaleur et le deuxième mode de déshumidification, lorsque le fluide réfrigérant issu du premier échangeur de chaleur 5 passe par la deuxième branche de dérivation C, d'éviter que ledit fluide réfrigérant ne passe par l'IHX 21. Cela permet ainsi d'empêcher les effets de l'IHX 21 et également de limiter les pertes de charges dues à la traversée dudit IHX 21.

Comme illustré sur la figure 18, le circuit de climatisation 1 réversible, peut également comporter une branche de contournement E de l'IHX 21 reliant :
∘ un neuvième point de jonction 15i disposé en aval du deuxième point de jonction 15b, entre ledit deuxième point de jonction 15b et l'IHX 21, et
∘ un dixième point de jonction 15j disposé en aval de l'échangeur de chaleur interne 21, entre ledit échangeur de chaleur interne 21 et le compresseur 3.

Cette branche de contournement E permet notamment au fluide réfrigérant en provenance du deuxième point de jonction 15b, de ne pas passer dans l'IHX 21 et ainsi éviter des pertes de charges. Cela est particulièrement utile dans le mode de chauffage, le deuxième mode de déshumidification et le mode de récupération de chaleur.

Afin de définir si le fluide réfrigérant en provenance du deuxième point de jonction 15b sera redirigé vers l'IHX 21 ou vers la branche de contournement E, le dispositif de redirection du fluide réfrigérant peut comporter une quatrième vanne d'arrêt disposée sur la branche de contournement E et une cinquième vanne d'arrêt disposée entre le neuvième point de jonction 15i et l'IHX 21.

Le circuit de climatisation 1 réversible peut également comporter un cinquième échangeur de chaleur 35 disposé en aval du dispositif de gestion et de distribution 19, entre ledit dispositif de gestion et de distribution 19 et la première entrée 7a du dispositif de séparation de phases 9, comme illustré sur la figure 18.

Ce cinquième échangeur de chaleur 35 peut être utilisé pour la gestion thermique d'autres éléments du véhicule électrique comme par exemple des batteries ou des composants électriques.

## Revendications

1. Circuit de climatisation (1) réversible pour véhicule automobile dans lequel circule un fluide réfrigérant et comportant dans le sens de circulation du fluide réfrigérant :
∘ un compresseur (3),
∘ un premier échangeur de chaleur (5) destiné à être traversé par un flux d'air extérieur (100) au véhicule automobile et disposé en aval du compresseur (3),
∘ un éjecteur (7) disposé en aval du premier échangeur de chaleur (5), et comprenant :
• une première entrée (7a) de fluide réfrigérant, reliée audit premier échangeur de chaleur (5),
• une deuxième entrée (7b) de fluide réfrigérant, et
• une sortie (7c) de fluide réfrigérant,
∘ un dispositif de séparation de phases (9) du fluide réfrigérant comportant :
• une entrée de fluide réfrigérant (9a), reliée à la sortie (7c) de fluide réfrigérant de l'éjecteur (7),
• une première sortie (9b) de fluide réfrigérant en phase gazeuse, reliée au compresseur (3), et
• une deuxième sortie (9c) de fluide réfrigérant en phase liquide,
∘ une première vanne de réglage (11) disposée en aval de la deuxième sortie (9c) de fluide réfrigérant du dispositif de séparation de phases (9),
∘ un deuxième échangeur de chaleur (13) destiné à être traversé par un flux d'air intérieur (200) à destination de l'habitacle du véhicule automobile, ledit deuxième échangeur (13) étant disposé en aval de la première vanne de réglage (11), entre ladite première vanne de réglage (11) et la deuxième entrée (7b) de fluide réfrigérant de l'éjecteur (7),
∘ une conduite de contournement (A) du dispositif de séparation de phases (9), ladite conduite de contournement (A) comportant un troisième échangeur de chaleur (17), et reliant :
• un premier point de jonction (15a) disposé en aval de la sortie (7c) de fluide réfrigérant de l'éjecteur (7), entre ledit éjecteur (7) et le dispositif de séparation de phases (9), et
• un deuxième point de jonction (15b) disposé en aval de la première sortie (9b) du dispositif de séparation de phases (9), entre ledit dispositif de séparation de phases (9) et le compresseur (3),
∘ une première branche de dérivation (B) comportant un quatrième échangeur de chaleur (23) destiné à être traversé par le flux d'air intérieur (200), et reliant :
• un troisième point de jonction (15c) disposé en aval du compresseur (3), entre ledit compresseur (3) et le premier échangeur de chaleur (5), et
• un quatrième point de jonction (15d) disposé en aval de premier échangeur de chaleur (5), entre ledit premier échangeur de chaleur (5) et la première entrée (7a) de l'éjecteur (7),
∘ une deuxième branche de dérivation (C) reliant :
• un cinquième point de jonction (15e) disposé en aval du premier échangeur de chaleur (5), entre ledit premier échangeur de chaleur (5) et le quatrième point de jonction (15d),
• un sixième point de jonction (15f) disposé en aval du deuxième échangeur de chaleur (13), entre ledit deuxième échangeur de chaleur (13) et la deuxième entrée (7b) de l'éjecteur (7),
∘ une troisième branche de dérivation (D), comportant une deuxième vanne de réglage (25), et reliant :
• un septième point de jonction (15g) disposé en aval de la deuxième sortie (9c) du dispositif de séparation de phases (9), entre ladite deuxième sortie (9c) du dispositif de séparation de phases (9) et la première vanne de réglage (11),
• un huitième point de jonction (15h) disposé en aval du troisième point de jonction (15c), entre ledit troisième point de jonction (15c) et le premier échangeur de chaleur (5).

2. Circuit de climatisation (1) réversible selon la revendication précédente, **caractérisé en ce que** le circuit de climatisation (1) comporte un dispositif de gestion et de distribution (19) du fluide réfrigérant en provenance de l'éjecteur (7) vers la conduite de contournement (A) et/ou le dispositif de séparation de phases (9).

3. Circuit de climatisation (1) réversible selon l'une des revendications précédentes, **caractérisé en ce que** le troisième échangeur de chaleur (17) est destiné à être traversé par le flux d'air intérieur (200) à destination de l'habitacle du véhicule automobile.

4. Circuit de climatisation (1) réversible selon la revendication précédente, **caractérisé en ce que** le troisième échangeur de chaleur (17) est placé en amont du deuxième échangeur de chaleur (13) dans le sens de circulation du flux d'air intérieur (200) à destination de l'habitacle du véhicule automobile.

5. Circuit de climatisation (1) réversible selon l'une des revendications précédentes, **caractérisé en ce qu'**il comporte un échangeur de chaleur interne (21) permettant un échange de chaleur entre le fluide réfrigérant en sortie du premier échangeur de chaleur (5) et le fluide réfrigérant en sortie du dispositif de séparation de phases (9) et/ou du troisième échangeur de chaleur (17).

6. Circuit de climatisation (1) réversible selon la revendication 5, **caractérisé en ce que** l'échangeur de chaleur interne (21) comporte une entrée et une sortie de fluide réfrigérant en provenance du premier échangeur de chaleur (5) disposées en amont du cinquième point de jonction (15e).

7. Circuit de climatisation (1) réversible selon la revendication 5, **caractérisé en ce que** l'échangeur de chaleur interne (21) comporte une entrée et une sortie de fluide réfrigérant en provenance du premier échangeur de chaleur (5) disposées en aval du cinquième point de jonction (15e).

8. Circuit de climatisation (1) réversible selon l'une des revendications 5 à 7, **caractérisé en ce qu'**il comporte une branche de contournement (E) de l'échangeur de chaleur interne (21) reliant :
∘ un neuvième point de jonction (15i) disposé en aval du deuxième point de jonction (15b), entre ledit deuxième point de jonction (15b) et l'échangeur de chaleur interne (21), et
∘ un dixième point de jonction (15j) disposé en aval de l'échangeur de chaleur interne (21), entre ledit échangeur de chaleur interne (21) et le compresseur (3).

9. Circuit de climatisation (1) réversible selon l'une des revendications 2 à 8, **caractérisé en ce qu'**il comporte un cinquième échangeur de chaleur (35) disposé en aval du dispositif de gestion et de distribution (19), entre ledit dispositif de gestion et de distribution (19) et la première entrée (9a) du dispositif de séparation de phases (9).

10. Procédé de fonctionnement d'un circuit de climatisation (1) réversible selon l'une des revendications 1 à 9, selon un mode pompe à chaleur dans lequel, le fluide réfrigérant passe successivement dans :
∘ le compresseur (3),
∘ le quatrième échangeur de chaleur (23) de la première branche de dérivation (B),
∘ l'éjecteur (7), via sa première entrée (7a),
∘ le dispositif de séparation de phases (9), où :
▪ la phase liquide du fluide réfrigérant passe ensuite dans la deuxième vanne de réglage (25) de la troisième branche de dérivation (D), le premier échangeur de chaleur (5), le fluide réfrigérant revenant dans la l'éjecteur (7) via sa deuxième entrée (7b), en empruntant la deuxième branche de dérivation (C),
▪ la phase gazeuse du fluide réfrigérant retourne vers le compresseur (3).

11. Procédé de fonctionnement selon la revendication précédente d'un circuit de climatisation (1) réversible selon l'une des revendications 5 à 7, dans lequel le fluide réfrigérant en phase gazeuse en sortie du dispositif de séparation de phases (9) passe par l'échangeur de chaleur interne (21) avant de rejoindre le compresseur (3) et que le fluide réfrigérant en sortie du premier échangeur de chaleur (5) passe par l'échangeur de chaleur interne (21) avant de rejoindre la deuxième entrée (7b) de l'éjecteur (7).

12. Procédé de fonctionnement d'un circuit de climatisation (1) réversible selon l'une des revendications 1 à 9, selon un premier mode de déshumidification dans lequel le fluide réfrigérant passe successivement dans :
∘ le compresseur (3),
∘ une portion du fluide réfrigérant en provenance du compresseur (3) passant dans :
▪ le premier échangeur de chaleur (5)
▪ l'éjecteur (7), via sa première entrée (7a),
• une portion de fluide réfrigérant en sortie de l'éjecteur (7) passant par le dispositif de séparation de phases (9), et :
∘ la phase liquide du fluide réfrigérant passe ensuite dans la première vanne de réglage (11), le deuxième échangeur de chaleur (13), le fluide réfrigérant revenant dans l'éjecteur (7) via sa deuxième entrée (7b),
∘ la phase gazeuse du fluide réfrigérant retourne vers le compresseur (3), et
• une autre portion du fluide réfrigérant en sortie de l'éjecteur (7) passant par le troisième échangeur de chaleur (17) de la conduite de contournement (A) avant de retourner vers le compresseur (3),
∘ une autre portion du fluide réfrigérant en provenance du compresseur (3) passant dans le quatrième échangeur de chaleur (23) de la première branche de dérivation (B), avant de retourner dans l'éjecteur (7), via sa première entrée (7a).

13. Procédé de fonctionnement selon la revendication précédente d'un circuit de climatisation (1) réversible selon l'une des revendications 5 à 7, dans lequel le fluide réfrigérant en phase gazeuse en sortie du dispositif de séparation de phases (9), mélangé avec le fluide en provenance du troisième échangeur de chaleur (17), passe par l'échangeur de chaleur interne (21) avant de rejoindre le compresseur (3) et que le fluide réfrigérant en sortie du premier échangeur de chaleur (5) passe par l'échangeur de chaleur interne (21) avant de se mélanger avec le fluide réfrigérant en provenance du quatrième échangeur de chaleur (23).

14. Procédé de fonctionnement d'un circuit de climatisation (1) réversible selon l'une des revendications 1 à 9, selon un deuxième mode de déshumidification dans lequel, le fluide réfrigérant passe successivement dans :
∘ le compresseur (3),
∘ le quatrième échangeur de chaleur (23) de la première branche de dérivation (B),
∘ l'éjecteur (7), via sa première entrée (7a),
∘ le dispositif de séparation de phases (9), où :
▪ une portion du fluide réfrigérant en phase liquide passe dans la deuxième vanne de réglage (25) de la troisième branche de dérivation (D), le premier échangeur de chaleur (5), le fluide réfrigérant revenant dans l'éjecteur (7) via sa deuxième entrée (7b), en empruntant la deuxième branche de dérivation (C),
▪ une autre portion du fluide réfrigérant en phase liquide passe dans la première vanne de réglage (11), le deuxième échangeur de chaleur (13), le fluide réfrigérant revenant dans l'éjecteur (7) via sa deuxième entrée (7b), et
▪ la phase gazeuse du fluide réfrigérant retourne vers le compresseur (3).

15. Procédé de fonctionnement selon la revendication précédente d'un circuit de climatisation (1) réversible selon l'une des revendications 5 à 7, dans lequel le fluide réfrigérant en phase gazeuse en sortie du dispositif de séparation de phases (9), passe par l'échangeur de chaleur interne (21) avant de rejoindre le compresseur (3) et que le fluide réfrigérant en sortie du premier échangeur de chaleur (5) passe par l'échangeur de chaleur interne (21) avant de retourner vers l'éjecteur (7) via sa deuxième entrée (7b), en empruntant la deuxième branche de dérivation (C).
